(19) **Europäisches Patentamt / European Patent Office / Office européen des brevets**

(11) **EP 4 368 960 B1**

(12) **EUROPEAN PATENT SPECIFICATION**

(45) Date of publication and mention
of the grant of the patent:
**28.01.2026 Bulletin 2026/05**

(21) Application number: **23805441.5**

(22) Date of filing: **28.08.2023**

(51) International Patent Classification (IPC):
**G01M 99/00** (2011.01)  **G01M 13/025** (2019.01)
**F03D 17/00** (2016.01)

(52) Cooperative Patent Classification (CPC):
**G01M 13/027; G01M 13/02; G01M 13/025;**
F03D 17/027; F05B 2260/83; Y02E 10/72

(86) International application number:
**PCT/CN2023/115258**

(87) International publication number:
**WO 2024/055834 (21.03.2024 Gazette 2024/12)**

(54) **LOAD DECOUPLING LOADING APPARATUS, METHOD AND SYSTEM FOR WIND TURBINE GENERATOR SET, AND CONTROL SYSTEM**

LASTENTKOPPLUNGS-LADEVORRICHTUNG, VERFAHREN UND SYSTEM FÜR EINEN WINDTURBINENGENERATORSATZ UND STEUERUNGSSYSTEM

APPAREIL, PROCÉDÉ ET SYSTÈME DE CHARGEMENT À DÉCOUPLAGE DE CHARGE POUR GROUPE ÉLECTROGÈNE D'ÉOLIENNE, ET SYSTÈME DE COMMANDE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **16.09.2022  CN 202211125308**

(43) Date of publication of application:
**15.05.2024 Bulletin 2024/20**

(73) Proprietor: **China Electric Power Research Institute**
**Beijing 100192 (CN)**

(72) Inventors:
 • **QIN, Shiyao**
  **Beijing 100192 (CN)**
 • **JIA, Haikun**
  **Beijing 100192 (CN)**
 • **XUE, Yang**
  **Beijing 100192 (CN)**
 • **WANG, Ruiming**
  **Beijing 100192 (CN)**
 • **FU, Deyi**
  **Beijing 100192 (CN)**
 • **SUN, Yong**
  **Beijing 100192 (CN)**
 • **WANG, Anqing**
  **Beijing 100192 (CN)**
 • **KONG, Lingxing**
  **Beijing 100192 (CN)**
 • **WANG, Wenzhuo**
  **Beijing 100192 (CN)**
 • **LI, Ting**
  **Beijing 100192 (CN)**

(74) Representative: **White, Andrew John et al**
**Mathys & Squire**
**The Shard**
**32 London Bridge Street**
**London SE1 9SG (GB)**

(56) References cited:
WO-A1-2019/219160       CN-A- 102 156 047
CN-A- 103 900 818       CN-A- 110 426 211
CN-A- 111 859 649       CN-A- 111 859 650
CN-A- 112 857 667       CN-A- 113 865 862
CN-A- 115 200 916       CN-U- 202 083 551
DE-A1- 102010 017 456

**(Cont. next page)**

- **YAN ET AL: "Research on Non-Torque Load Technology of Wind Power Transmission Chain", 1 January 2012 (2012-01-01), XP009553064, Retrieved from the Internet <URL:https://oversea.cnki.net/KCMS/detail/detail.aspx?dbcode=CMFD&dbname=CMFD2012&filename=1012321188.nh&uniplatform=OVERSEA&v=R-apHPMBsejReyKefLaC_K3yYU6Ulh l538emH8jjtJ_HUdj7j_Xjh47O_M4iZVll>**

- **YAN, WEIXIN: "Research on Non-Torque Load Technology of Wind Power Transmission Chain", MASTER'S THESIS, no. 7, 1 January 2012 (2012-01-01), CN, pages 1 - 87, XP009553064**
- **WANG, CHENGDONG: "Research on the Electro-hydraulic Loading Device for Wind Turbine Load Simulation", MASTER'S THESIS, no. 7, 1 March 2016 (2016-03-01), CN, pages 1 - 109, XP009553065**

# EP 4 368 960 B1

**Description**

CROSS-REFERENCE TO RELATED APPLICATIONS

This application is filed based on and claims priority to Chinese Patent application No. 202211125308.X field on September 16, 2022 and entitled "LOAD DECOUPLING AND LOADING APPARATUS, METHOD AND SYSTEM FOR WIND TURBINE, AND CONTROL SYSTEM".

TECHNICAL FIELD

The application relates to, but is not limited to the technical field of testing and detecting a wind turbine, and in particular to a load decoupling and loading apparatus, method and system for a wind turbine.

BACKGROUND

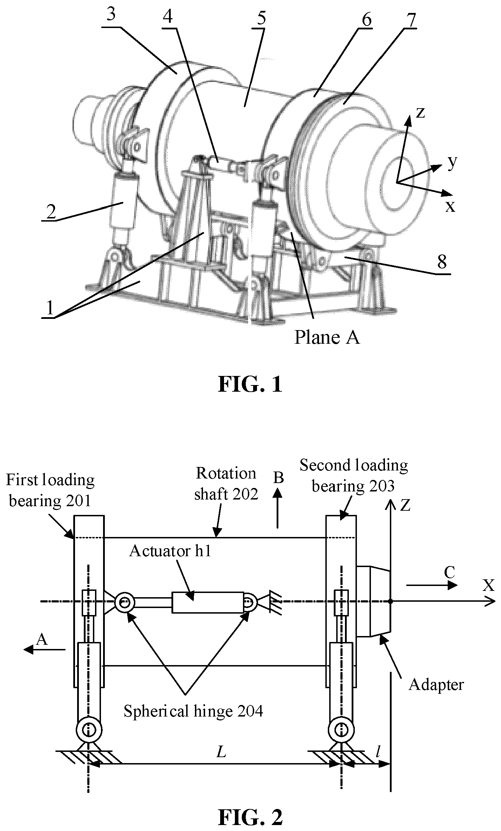

A transmission chain of a wind turbine is located in an engine room, and is mainly composed of a main shaft, a bearing, a gearbox, a generator, a converter and other components. The transmission chain is very important for the whole machine to achieve good or bad performance. With the development of offshore wind power, capacity of the wind turbine is increasing, and difficulty of on-site testing of the whole machine is also increasing. In statistics of wind power accidents, failure rates of the transmission chain and its gearbox, converter and other components are relatively high, so it is very necessary to test components of the transmission chain. Due to a harsh marine environment, it is difficult to carry out on-site testing. Full-scale ground testing of offshore wind turbines has become a development trend of industry. For example, a loading apparatus is proposed in "Design and research of electro-hydraulic loading apparatus for simulating loads of wind turbine", as shown in FIG. 1, this technology provides mechanical structure forces in a vertical direction. A full-scale ground test of the engine room, also referred to as a full-scale ground test of the transmission chain, may quickly and effectively trial, verify and test new technologies, new designs and new products, to find design problems and potential safety hazards as early as possible, and achieve purposes of reducing technical risks, reducing product development costs, shortening research and development cycle, etc.

The full-scale ground test of the engine room only carries out a ground loading test on a main part of the engine room except a tower and wind wheel of the wind turbine, and wind wheel loads during operation of the wind turbine are equivalent to six degree-of-freedom (DOF) loads on the main shaft, including forces $F_X$, $F_Y$ and $F_Z$ along X, Y and Z directions and torques $M_X$, $M_Y$ and $M_Z$ around X, Y and Z axes, as shown in FIG. 1. A torque around x axis is an aerodynamic torque $M_X$ of the wind wheel, which is applied to the main shaft of the engine room through a motor, and five DOF non-torsional loads in other directions are applied to an end of a main shaft of a wind turbine prototype through a five DOF loading apparatus, to test power generation characteristics and mechanical characteristics of the transmission chain during the experiment. Six DOF load values are derived from load values calculated by a design software in a design stage of the wind turbine, and all act on a center position of a hub.

The National Renewable Energy Laboratory (NREL) in United States, the Fraunhofer Institute (Fraunhofer IWES) in Germany, the Offshore Renewable Energy Incubation Center (ORE Catapult) in England, the National Renewable Energy Center (CENER) in Spain, the Lindu Offshore Renewable Energy Center (LORC) in Denmark, or the like, all have built national-level public ground test systems for transmission chains of large-scale wind turbines. At present, power levels of ground test systems of the transmission chains in countries such as United States, England, Germany, Denmark or the like have reached 10MW to 25MW.

A loading apparatus is proposed in "Design and research of electro-hydraulic loading apparatus for simulating loads of wind turbine", the loading apparatus includes a base 1, vertical actuators 2, hydrostatic bearing outer sleeves 3 and 6, a horizontal actuator 4, a torque tube 5, a connection flange 7 and a horizontal connection rod 8. Actuators are distributed in vertical and horizontal planes respectively. Axial loading is completed by two actuators in a horizontal direction, and radial loading is completed by two pairs of actuators on two vertical planes in a vertical direction. Because influence of the horizontal actuator on the vertical actuator may be neglected, horizontal loading may be independent and relatively simple, and this technology only provides mechanical structure forces in the vertical direction. A structure form of the loading apparatus is provided in this technology, however, a five DOF loading principle and method are not proposed. The loading method in this technology only achieves loading of $F_X$, $F_Y$ and $F_Z$, and does not achieve loading of $M_Y$ and $M_Z$.

Related background may be found in YAN ET AL: "Research on Non-Torque Load Technology of Wind Power Transmission Chain", MASTER's THESIS ZHEJIANG UNIVERSITY CN PAGE(S) 1-87, 1 January 2012, and WO 2019/219160A1 (R&D AS [DK]) 21 November 2019.

3

## SUMMARY

In order to overcome the above deficiencies of the related art, an embodiment of the application provides a load decoupling and loading apparatus for a wind turbine, the loading apparatus includes multiple actuators, a first loading bearing, a rotation shaft and a second loading bearing.

The rotation shaft is arranged horizontally with a ground, the first loading bearing and the second loading bearing are sleeved at both ends of the rotation shaft respectively, an end of the rotation shaft adjacent to the first loading bearing is connected to an external motor, and another end of the rotation shaft adjacent to the second loading bearing is connected to an external test prototype.

Output ends of multiple actuators are connected in horizontal and vertical directions of the first loading bearing and in a vertical direction of the second loading bearing respectively, fixed ends of actuators in the horizontal direction are connected to a supporting structure fixed on the ground through spherical hinges, and fixed ends of actuators in the vertical direction are fixed on the ground through spherical hinges.

The actuators provide five DOF loads for the test prototype through the first loading bearing and the second loading bearing.

The motor provides a torque load for the test prototype through the first loading bearing, the rotation shaft and the second loading bearing sequentially.

In some embodiments, the actuators connected in the vertical direction of the first loading bearing may include an actuator $l_1$ and an actuator $r_1$, and the actuator $l_1$ and the actuator $r_1$ are connected to both sides of the first loading bearing respectively.

In some embodiments, the actuators connected in the horizontal direction of the first loading bearing may include an actuator $h_1$ and an actuator $h_2$, and the actuator $h_1$ and the actuator $h_2$ are horizontally connected to both sides of the first loading bearing adjacent to the rotation shaft respectively.

In some embodiments, the actuators connected in the vertical direction of the second loading bearing may include an actuator $l_2$ and an actuator $r_2$, and the actuator $l_2$ and the actuator $r_2$ are connected to both sides of the second loading bearing respectively.

In some embodiments, output ends of the actuator $l_1$ and the actuator $r_1$ may be connected to both sides of the first loading bearing through spherical hinges.

Output ends of the actuator $l_2$ and the actuator $r_2$ may be connected to both sides of the second loading bearing through spherical hinges.

Output ends of the actuator $h_1$ and the actuator $h_2$ may be connected to the first loading bearing through spherical hinges, and fixed ends of the actuator $h_1$ and the actuator $h_2$ are connected to the supporting structure fixed on the ground through spherical hinges.

The spherical hinges may be flush with horizontal center lines of the first loading bearing and the second loading bearing, and fixed ends of the actuator $l_1$, the actuator $r_1$, the actuator $l_2$ and the actuator $r_2$ are fixed on the ground through spherical hinges.

In some embodiments, horizontal connection rods may be further connected below the first loading bearing and the second loading bearing, and the horizontal connection rods apply reaction forces on the first loading bearing and the second loading bearing when the actuators load on the first loading bearing or the second loading bearing.

An embodiment of the application further provides a load decoupling and loading system for a wind turbine, the loading system includes a wind turbine simulation device, a controller group, a motor, a test prototype, and the load decoupling and loading apparatus for the wind turbine as described in any one of the above paragraphs.

The controller group is connected to the wind turbine simulation device, the motor and the loading apparatus respectively, and the loading apparatus is further connected to the test prototype.

The wind turbine simulation device is configured to calculate a torque load and five DOF loads required to be loaded on the test prototype, and send the torque load and the five DOF loads to the controller group.

The motor is configured to determine a rotational speed and a torque based on the torque load provided by the controller group, and transmit the rotational speed and the torque to the loading apparatus.

The loading apparatus is configured to apply the rotational speed, the torque and the five DOF loads provided by the controller group to the test prototype respectively.

In some embodiments, the motor may be connected to an end of the rotation shaft of the loading apparatus adjacent to the first loading bearing, and another end of the rotation shaft of the loading apparatus adjacent to the second loading bearing may be connected to a top center of a main shaft of the test prototype. The controller group includes a motor controller and multiple actuator controllers, the motor controller is connected to the simulation device and the motor respectively, the actuator controllers are connected to the simulation device, a number of the actuator controllers is consistent with a number of the actuators of the loading apparatus, and each actuator controller is further connected to a respective one of the actuators.

In some embodiments, the wind turbine simulation device may be configured to calculate the torque load and the five DOF loads, and calculate a loading value for each actuator according to the five DOF loads.

In some embodiments, each actuator controller may be configured to control a connected actuator to generate a loading force, and apply, by the actuator, the loading force to a corresponding first loading bearing or second loading bearing, to generate the five DOF loads loaded on the test prototype.

The five DOF loads include horizontal and vertical loads, and the loading force includes at least a jacking force or a contraction force.

In some embodiments, the first loading bearing may generate the horizontal load according to loading forces provided by actuators in the horizontal direction of the first loading bearing.

The first loading bearing and the second loading bearing may generate vertical loads according to loading forces provided by actuators in the vertical direction of the first loading bearing and actuators in the vertical direction of the second loading bearing respectively.

In some embodiments, the motor controller may be specifically configured to control the motor to drive the rotation shaft to rotate based on the torque load, then drive the first loading bearing to operate, and then apply the torque load to the top center of the main shaft of the test prototype.

In some embodiments, the system may further include a coupling, an end of the rotation shaft of the loading apparatus adjacent to the first loading bearing is connected to the motor through the coupling.

In some embodiments, the system may further include an adapter, another end of the rotation shaft of the loading apparatus adjacent to the second loading bearing is fixedly connected to the test prototype through the adapter.

An embodiment of the application further provides a load decoupling and loading method for a wind turbine, the method includes the following operations.

A wind turbine simulation device of a load decoupling and loading system for the wind turbine calculates a torque load and five DOF loads.

A controller group of the load decoupling and loading system for the wind turbine controls a motor to provide the torque load for a test prototype.

A target loading value of each actuator of a load decoupling and loading apparatus for the wind turbine is obtained according to the five DOF loads and a calculation formula of an actuator loading value matrix.

The controller group of the load decoupling and loading system for the wind turbine loads the target loading value and the torque load synchronously on a main shaft of the test prototype.

In some embodiments, the operation of loading, by the controller group of the load decoupling and loading system for the wind turbine, the target loading value and the torque load synchronously on the main shaft of the test prototype may include the following operations.

Each actuator controller in the controller group controls a respective actuator to apply a loading force according to the target loading value, generate the five DOF loads, and load the five DOF loads and the torque load synchronously on the main shaft of the test prototype.

Each actuator controller controls a corresponding actuator to apply load to a first loading bearing or a second loading bearing of the load decoupling and loading apparatus for the wind turbine according to the target loading value, an actual loading value of the corresponding actuator is fed back through a preset sensor, and the loading force applied by the actuator is adjusted when the actual loading value is not equal to the target loading value, until the actual loading value of the actuator is equal to the target loading value.

In some embodiments, the operation of controlling, by each actuator controller in the controller group, the respective actuator to apply the loading force according to the target loading value, generate the five DOF loads may include the following operations.

Each actuator controller controls a connected actuator to generate the loading force according to the target loading value, and generate the five DOF loads loaded on the test prototype by applying the loading force to a corresponding first loading bearing or second loading bearing.

The five DOF loads include horizontal and vertical loads, and the loading force includes at least a jacking force or a contraction force.

In some embodiments, the operation of obtaining the target loading value of each actuator of the load decoupling and loading apparatus for the wind turbine according to the five DOF loads and the calculation formula of the actuator loading value matrix may include the following operations.

A five DOF load vector is determined based on the five DOF loads.

The five DOF load vector and an actuator load transition matrix are brought into the calculation formula of the actuator loading value matrix, to calculate the actuator loading value matrix.

The actuator loading value matrix is determined by the target loading value of each actuator.

The transition matrix is determined by a first force arm coefficient and a second force arm coefficient, the first force arm coefficient is a coefficient formed by a ratio between a force arm from an output end of an actuator $r_1$ to a center of a first loading bearing and a force arm from a horizontal connection rod to the center of the first loading bearing, and the second force arm coefficient is a coefficient formed by a ratio between a force arm from an output end of an actuator $r_2$ to a center of a second loading bearing and a force arm from the horizontal connection rod to the center of the second loading bearing.

In some embodiments, the transition matrix T may be as follows:

$$T = \begin{bmatrix} 2 & 0 & 0 & 0 & 0 \\ 0 & \gamma_1 & -\gamma_1 & \gamma_2 & -\gamma_2 \\ 0 & 1 & 1 & 1 & 1 \\ 0 & L+l & L+l & l & l \\ 0 & -\gamma_1(L+l) & \gamma_1(L+l) & -\gamma_2 l & \gamma_2 l \end{bmatrix}$$

here $\gamma_1$ is the first force arm coefficient, $\gamma_2$ is the second force arm coefficient, L is a length of a force arm between the first loading bearing and the second loading bearing in the loading system, and $l$ is a length of a force arm between the second loading bearing and an end of the main shaft of the test prototype.

In some embodiments, the calculation formula of the actuator loading value matrix may be as follows:

$$\boldsymbol{F}_{act} = \boldsymbol{T}^{-1} \cdot \boldsymbol{F}_{NT}$$

here $F_{act}$ is the actuator loading value matrix, $T$ is the actuator load transition matrix, and $F_{NT}$ is the five DOF load vector, the five DOF load vector is composed of the five DOF loads.

$F_{NT}$ is as follows:

$$\mathbf{F}_{NT} = \begin{bmatrix} F_X \\ F_Y \\ F_Z \\ M_Y \\ M_Z \end{bmatrix}$$

here $F_X$ is a force in a preset X direction, $F_Y$ is a force in a preset Y direction, $F_Z$ is a force in a preset Z direction, $M_Y$ is a torque around a preset Y axis, and $M_Z$ is a torque around a preset Z axis.

An embodiment of the application further provides a simulation control system for a load decoupling method for a wind turbine, the simulation control system is arranged in a wind turbine simulation device, and includes a wind turbine simulation module, a motor control module, a five DOF load calculation module and an actuator control module.

The wind turbine simulation module is configured to calculate, by a wind turbine simulation device of a load decoupling and loading system for the wind turbine, a torque load and five DOF loads.

The motor control module is configured to control, by a controller group of the load decoupling and loading system for the wind turbine, a motor to provide the torque load for a test prototype.

The five DOF load calculation module is configured to obtain a target loading value of each actuator of a load decoupling and loading apparatus for the wind turbine according to the five DOF loads and a calculation formula of an actuator loading value matrix.

The actuator control module is configured to load, by the controller group of the load decoupling and loading system for the wind turbine, the target loading value and the torque load synchronously on a main shaft of the test prototype.

In some embodiments, the actuator control module may be specifically configured to control, by each actuator controller in the controller group, a respective actuator to apply a loading force according to the target loading value, generate the five DOF loads, and load the five DOF loads and the torque load synchronously on the main shaft of the test prototype. Each actuator controller controls a corresponding actuator to load on a first loading bearing or a second loading bearing of the load decoupling and loading apparatus for the wind turbine according to the target loading value, an actual loading value of the corresponding actuator is fed back through a preset sensor, and the loading force applied by the actuator is adjusted when the actual loading value is not equal to the target loading value, until the actual loading value of the actuator is equal to the target loading value.

In some embodiments, the actuator control module may be further configured to control, by each actuator controller, a connected actuator to generate the loading force according to the target loading value, and generate the five DOF loads loaded on the test prototype by applying the loading force to a corresponding first loading bearing or second loading bearing. The five DOF loads include horizontal and vertical loads, and the loading force includes at least a jacking force or a contraction force.

In some embodiments, the five DOF load calculation module may be specifically configured to: determine a five DOF load vector based on the five DOF loads; and bring the five DOF load vector and an actuator load transition matrix into the calculation formula of the actuator loading value matrix, to calculate the actuator loading value matrix. The actuator loading value matrix is determined by the target loading value of each actuator. The transition matrix is determined by a first force arm coefficient and a second force arm coefficient, the first force arm coefficient is a coefficient formed by a ratio between a force arm from an output end of an actuator $r_1$ to a center of a first loading bearing and a force arm from a horizontal connection rod to the center of the first loading bearing, and the second force arm coefficient is a coefficient formed by a ratio between a force arm from an output end of an actuator $r_2$ to a center of a second loading bearing and a force arm from the horizontal connection rod to the center of the second loading bearing.

In some embodiments, the transition matrix T may be as follows:

$$T = \begin{bmatrix} 2 & 0 & 0 & 0 & 0 \\ 0 & \gamma_1 & -\gamma_1 & \gamma_2 & -\gamma_2 \\ 0 & 1 & 1 & 1 & 1 \\ 0 & L+l & L+l & l & l \\ 0 & -\gamma_1(L+l) & \gamma_1(L+l) & -\gamma_2 l & \gamma_2 l \end{bmatrix}$$

here $\gamma_1$ is the first force arm coefficient, $\gamma_2$ is the second force arm coefficient, L is a length of a force arm between the first loading bearing and the second loading bearing in the loading system, and $l$ is a length of a force arm between the second loading bearing and an end of the main shaft of the test prototype.

In some embodiments, the calculation formula of the actuator loading value matrix may be as follows:

$$F_{act} = T^{-1} \cdot F_{NT}$$

here $F_{act}$ is the actuator loading value matrix, $T$ is the actuator load transition matrix, and $F_{NT}$ is the five DOF load vector, the five DOF load vector is composed of the five DOF loads.

$F_{NT}$ is as follows:

$$F_{NT} = \begin{bmatrix} F_X \\ F_Y \\ F_Z \\ M_Y \\ M_Z \end{bmatrix}$$

here $F_X$ is a force in a preset X direction, $F_Y$ is a force in a preset Y direction, $F_Z$ is a force in a preset Z direction, $M_Y$ is a torque around a preset Y axis, and $M_Z$ is a torque around a preset Z axis.

An embodiment of the application further provides a computer device, the computer device includes one or more processors, and a memory configured to store one or more programs. The one or more programs are executed by the one or more processors to implement the load decoupling and loading method for a wind turbine as described above.

An embodiment of the application further provides a computer-readable storage medium, having thereon a computer program, the computer program is executed to implement the load decoupling and loading method for a wind turbine as described above.

An embodiment of the application further provides a computer program product, the computer program product includes a computer program or instructions, the computer program or instructions are executed on an electronic device to implement the load decoupling and loading method for a wind turbine as described above.

Compared with the closest related art, the application has the following beneficial effects.

The embodiments of the application provide a load decoupling and loading apparatus, method and system for a wind turbine, and a control system, which includes multiple actuators, a first loading bearing, a rotation shaft and a second loading bearing. The rotation shaft is arranged horizontally with a ground, the first loading bearing and the second loading bearing are sleeved at both ends of the rotation shaft respectively, an end of the rotation shaft adjacent to the first loading bearing is connected to an external motor, and another end of the rotation shaft adjacent to the second loading bearing is connected to an external test prototype. Output ends of multiple actuators are connected in horizontal and vertical directions of the first loading bearing and in a vertical direction of the second loading bearing respectively, fixed ends of actuators in the horizontal direction are connected to a supporting structure fixed on the ground through spherical hinges, and fixed ends of actuators in the vertical direction are fixed on the ground through spherical hinges. The actuators provide five DOF loads for the test prototype through the first loading bearing and the second loading bearing. The motor provides a torque load for the test prototype through the first loading bearing, the rotation shaft and the second loading bearing sequentially. According to the application, a load loading system of the wind turbine is used to transmit a torque load and five DOF non-torsional loads of six DOF loads as loading values to the motor and the loading apparatus respectively, and the motor and the loading apparatus are controlled to load synchronously, which may quickly and effectively trial, verify and test new technologies and new products through the test prototype; calculation samples of freedom loads are expanded by considering influence of the torque load on the wind turbine; the five DOF non-torsional loads are calculated according to a loading formula of the five DOF non-torsional loads, which achieves control of multiple actuators in the loading apparatus, enhances accuracy of loading control of a transmission chain of the wind turbine, and improves experimental accuracy of the wind turbine.

## BRIEF DESCRIPTION OF THE DRAWINGS

In order to explain specific implementations of the application or technical solutions of the related art more clearly, the drawings required in the specific implementations or the related art will be briefly introduced below. It is apparent that the drawings described below are some implementations of the application, and other drawings may also be obtained by those of ordinary skill in the art according to these drawings without paying any creative work.

FIG. 1 is a structure of a load simulator involved in the related art.

FIG. 2 is a structural diagram of a load decoupling and loading apparatus for a wind turbine according to an embodiment of the application.

FIG. 3 is a structural diagram in a direction A of the load decoupling and loading apparatus for a wind turbine provided in FIG. 2.

FIG. 4 is a structural diagram in a direction B of the load decoupling and loading apparatus for a wind turbine provided in FIG. 2.

FIG. 5 is a structural diagram in a direction C of the load decoupling and loading apparatus for a wind turbine provided in FIG. 2.

FIG. 6 is a schematic diagram of a wind turbine coordinate system in a load decoupling and loading apparatus for a wind turbine according to an embodiment of the application.

FIG. 7 is a schematic diagram of a mechanical structure of a load decoupling and loading apparatus for a wind turbine according to an embodiment of the application.

FIG. 8 is a flowchart of a load decoupling and loading method for a transmission chain of a wind turbine according to an embodiment of the application.

FIG. 9 is a flowchart of a loading method of six DOF loads tested for a wind turbine test according to an embodiment of the application.

FIG. 10 is a schematic diagram of a controller group in a load decoupling and loading system for a transmission chain of a wind turbine according to an embodiment of the application.

## DETAILED DESCRIPTION

The technical solutions of the application will be clearly and completely described below with reference to the drawings. It is apparent that the described embodiments are part of the embodiments of the application, rather than all of the embodiments. Based on the embodiments in the application, all other embodiments obtained by those of ordinary skill in the art without paying any creative work fall within the scope of protection of the application.
In descriptions of the application, it should be noted that orientation or positional relationships indicated by terms "center", "upper", "lower", "left", "right", "vertical", "horizontal", "inner", "outer" or the like are based on orientation or positional relationships shown in the drawings, and are only intended to facilitate describing the application and simplifying the descriptions, rather than indicating or implying that the referred device or element must have a particular orientation, configure and operate in a particular orientation, and thus cannot be understood as limitation of the application. Furthermore, terms "first", "second" and "third" are only used for descriptive purposes and cannot be understood as indicating or implying relative importance.

In the descriptions of the application, it should be noted that unless otherwise specified and defined clearly, terms "mount", "connect" and "connecting" should be understood in a broad sense, for example, it may be a fixed connection, or a detachable connection, or an integral connection; may be a mechanical connection, or an electrical connection; may be a direct connection, or an indirect connection through an intermediate medium; may be internal communication between two elements; may be a wireless connection or a wired connection.. Specific meanings of the above terms in the application may be understood by those of ordinary skill in the art according to specific cases.

Furthermore, technical features involved in different embodiments of the application as described below may be combined with each other, as long as they do not conflict with each other.

First embodiment

An embodiment of the application provides a load decoupling and loading apparatus for a wind turbine, as shown in FIG. 2, the loading apparatus includes multiple actuators, a first loading bearing 201, a rotation shaft 202 and a second loading bearing 203.

The rotation shaft 202 is arranged horizontally with a ground, the first loading bearing 201 and the second loading bearing 203 are sleeved at both ends of the rotation shaft 202 respectively, an end of the rotation shaft 202 adjacent to the first loading bearing 201 is connected to an external motor, and another end of the rotation shaft 202 adjacent to the second loading bearing is connected to an external test prototype.

Output ends of multiple actuators are connected in horizontal and vertical directions of the first loading bearing 201 and in a vertical direction of the second loading bearing 203 respectively, fixed ends of actuators in the horizontal direction are connected to a supporting structure fixed on the ground through spherical hinges 204, and fixed ends of actuators in the vertical direction are fixed on the ground through spherical hinges 204. Here, both ends of the actuator are connected or fixed through spherical hinges.

In some embodiments, the actuators provide five DOF loads for the test prototype through the first loading bearing 201 and the second loading bearing 203, and the motor provides a torque load for the test prototype through the first loading bearing 201, the rotation shaft 202 and the second loading bearing 203 sequentially.

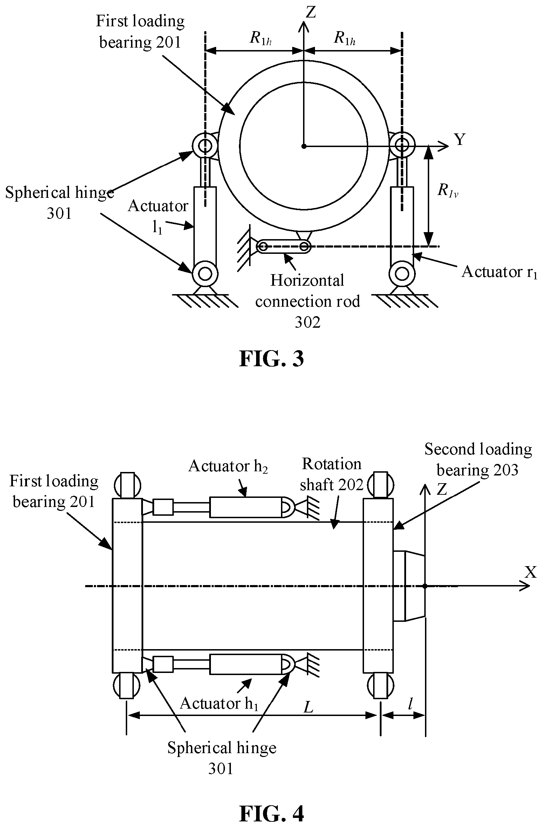

In some embodiments, as shown in FIG. 3, the actuators connected in the vertical direction of the first loading bearing 201 include an actuator $l_1$ and an actuator $r_1$, and the actuator $l_1$ and the actuator $r_1$ are connected to both sides of the first loading bearing 201 respectively.

In some embodiments, as shown in FIG. 4, the actuators connected in the horizontal direction of the first loading bearing include an actuator $h_1$ and an actuator $h_2$, and the actuator $h_1$ and the actuator $h_2$ are horizontally connected to both sides of the first loading bearing 201 adjacent to the rotation shaft respectively.

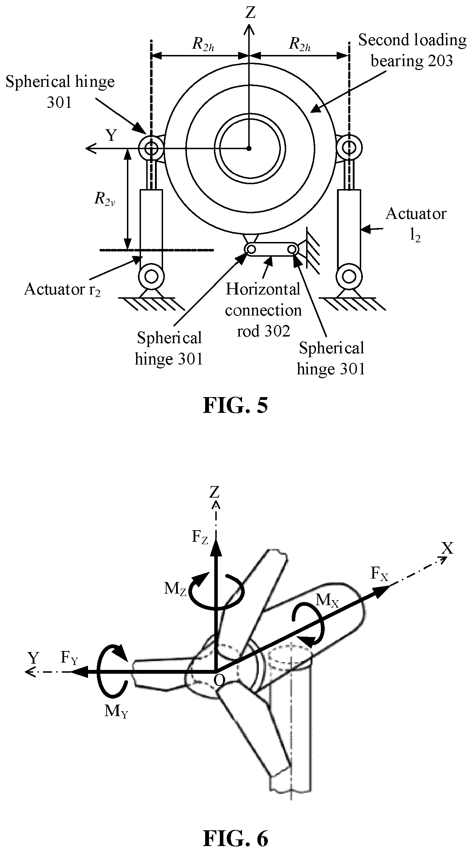

In some embodiments, as shown in FIG. 5, the actuators connected in the vertical direction of the second loading bearing 203 include an actuator $l_2$ and an actuator $r_2$, and the actuator $l_2$ and the actuator $r_2$ are connected to both sides of the second loading bearing 203 respectively.

In some embodiments, with continuous reference to FIG. 3, output ends of the actuator $l_1$ and the actuator $r_1$ are connected to both sides of the first loading bearing 201 through spherical hinges 301. With continuous reference to FIG. 4, output ends of the actuator $l_2$ and the actuator $r_2$ are connected to both sides of the second loading bearing 203 through spherical hinges 301. With continuous reference to FIG. 5, output ends of the actuator $h_1$ and the actuator $h_2$ are connected to the first loading bearing 201 through spherical hinges 301, and fixed ends of the actuator $h_1$ and the actuator $h_2$ are connected to the supporting structure fixed on the ground through spherical hinges 301. The spherical hinges 301 are flush with horizontal center lines of the first loading bearing 201 and the second loading bearing 203, and fixed ends of the actuator $l_1$, the actuator $r_1$, the actuator $l_2$ and the actuator $r_2$ are fixed on the ground through spherical hinges 301.

In some embodiments, as shown in FIG. 3 and FIG. 5, horizontal connection rods 302 are further connected below the first loading bearing 201 and the second loading bearing 203, and the horizontal connection rods 302 apply reaction forces on the first loading bearing 201 and the second loading bearing 203 when the actuators apply loads to the first loading bearing 201 or the second loading bearing 203.

In some embodiments, the first loading bearing 201 and the second loading bearing 203 provide horizontal and vertical forces in planes where they are located respectively. The two loading bearings cooperate to achieve loading of $M_Y$ and $M_Z$. For the first loading bearing 201, $R_{1h}$ represents a force arm from an acting force of the actuator to a circle center of the loading bearing, $R_{1v}$ represents a force arm from the reaction force of the horizontal connection rod to the circle center of the loading bearing, $F_{l1}$ represents an acting force of the actuator $l_1$, $F_{r1}$ represents an acting force of the actuator $r_1$, a jacking force of the actuator is positive, and a contraction force of the actuator is negative, $\gamma_1 = R_{1h}/R_{1v}$, $\gamma_2 = R_{2h}/R_{2v}$.

For the second loading bearing 203, $R_{2h}$ represents a force arm from an acting force of the actuator to a circle center of the loading bearing, $R_{2v}$ represents a force arm from the reaction force of the horizontal connection rod to the circle center of the loading bearing, $F_{l2}$ represents an acting force of the actuator $l_2$, $F_{r2}$ represents an acting force of the actuator $r_2$, a jacking force of the actuator is positive, and a contraction force of the actuator is negative, $\gamma_2 = R_{2h}/R_{2v}$.

In the loading apparatus provided in the embodiment of the application, wind wheel loads of the wind turbine may be equivalent to six degree-of-freedom (DOF) loads when the wind wheel loads of the wind turbine are applied to a hub of the wind turbine. The loading apparatus functions to load the six DOF loads equivalently on a main shaft of the test prototype. As shown in FIG. 6, the six DOF loads include forces $F_X$, $F_Y$ and $F_Z$ along X, Y and Z directions and torques $M_X$, $M_Y$ and $M_Z$ around X, Y and Z axes; the load $M_X$ is provided by the motor and loaded on the test prototype through a rotation shaft of a loading system, and five DOF non-torsional loads $F_X$, $F_Y$, $F_Z$, $M_Y$ and $M_Z$ are loaded by controlling actions of actuators in the loading system; the five DOF non-torsional loads are the five DOF loads. A loading point of loads is located at a top center of the main shaft of the test prototype, that is, an origin of a coordinate system XYZ. In addition to the actuators used in the embodiments of the application, other mechanical apparatuses capable of achieving telescopic movement may be used as types of the actuators of the embodiments of the application, such as an apparatus with a motor driving a threaded rod to achieve telescopic movement, and an apparatus with a hydraulic motor driving a threaded rod to achieve telescopic movement. A loading bearing and a matched actuator of the loading apparatus form a combination body, and a number of combination bodies may be two or more in theory. According to a derivation method of a loading principle of this technology, a loading formula of five DOF non-torsional loads of the loading system may be obtained.

Second embodiment

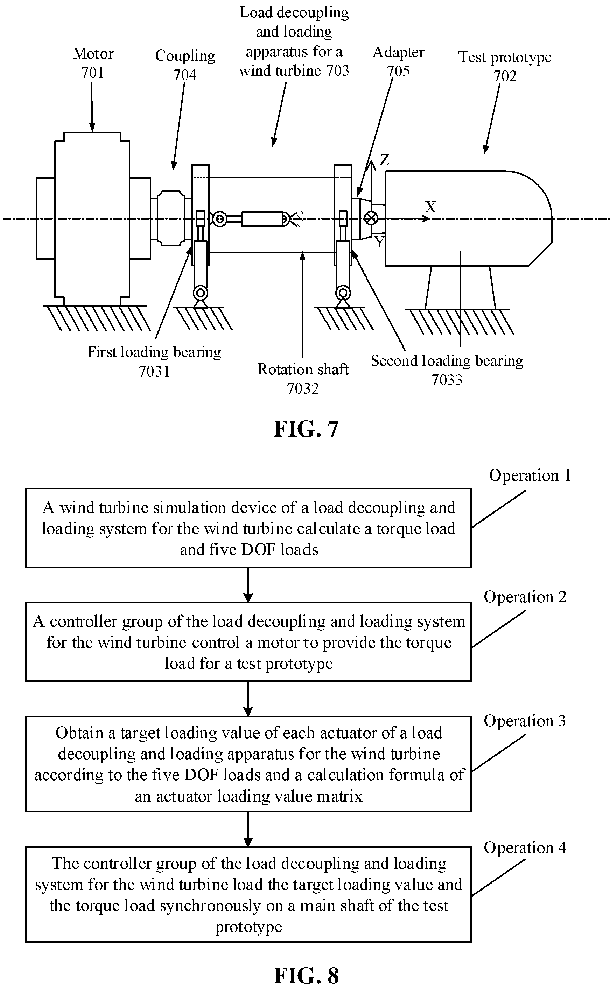

An embodiment of the application further provides a load decoupling and loading system for a wind turbine, as shown in FIG. 7, the loading system includes a wind turbine simulation device (not shown in FIG. 7), a controller group (not shown in FIG. 7), a motor 701, a test prototype 702, and the load decoupling and loading apparatus for the wind turbine 703 as described in the first embodiment.

In some embodiments, the controller group is connected to the wind turbine simulation device, the motor 701 and the loading apparatus 703 respectively, and the loading apparatus 703 is further connected to the test prototype 702. The wind turbine simulation device is configured to calculate a torque load and five DOF loads required to be loaded on the test prototype 702, and send the torque load and the five DOF loads to the controller group. The motor 701 is configured to determine a rotational speed and a torque based on the torque load provided by the controller group, and transmit the rotational speed and the torque to the loading apparatus 703. The loading apparatus 703 is configured to apply the rotational speed, the torque and the five DOF loads provided by the controller group to the test prototype 702 respectively.

In some embodiments, the motor 701 is connected to a first loading bearing 7031 and a rotation shaft 7032 of the loading apparatus 703, a second loading bearing 7033 of the loading apparatus 703 is connected to a top center of a main shaft of the test prototype 702. The controller group includes a motor controller and multiple actuator controllers, the motor controller is connected to the simulation device and the motor 701 respectively, the actuator controllers are connected to the simulation device, a number of the actuator controllers is consistent with a number of the actuators of the loading apparatus 703, and each actuator controller is further connected to a respective one of the actuators.

In some embodiments, the wind turbine simulation device is specifically configured to calculate the torque load and the five DOF loads, and calculate a loading value for each actuator according to the five DOF loads.

In some embodiments, each actuator controller is configured to control a connected actuator to generate a loading force, and apply, by the actuator, the loading force to a corresponding first loading bearing or second loading bearing, to generate the five DOF loads loaded on the test prototype. The five DOF loads include horizontal and vertical loads, and the loading force includes at least a jacking force or a contraction force.

In some embodiments, the first loading bearing generates the horizontal load according to loading forces provided by actuators in the horizontal direction of the first loading bearing. The first loading bearing and the second loading bearing generate vertical loads according to loading forces provided by actuators in the vertical direction of the first loading bearing and actuators in the vertical direction of the second loading bearing respectively.

In some embodiments, the motor controller is specifically configured to control the motor to drive the rotation shaft to rotate based on the torque load, then drive the first loading bearing to operate, and then apply the torque load to the top center of the main shaft of the test prototype.

In some embodiments, with continuous reference to FIG. 7, the system further includes a coupling 704, an end of the rotation shaft 7032 of the loading apparatus adjacent to the first loading bearing 7031 is connected to the motor 701 through the coupling 704. The system further includes an adapter 705, another end of the rotation shaft 7032 of the loading apparatus adjacent to the second loading bearing 7033 is fixedly connected to the test prototype 702 through the adapter 705.

In some embodiments, the rotation shaft 7032 of the loading apparatus 703 is configured to transmit rotation of the motor 701, and both ends of the rotation shaft 7032 are sleeved with the first loading bearing 7031 and the second loading bearing 7033. Each loading bearing is connected to two actuators in the vertical direction. The loading apparatus 703 is provided with a total of six actuators, of which four actuators are arranged vertically and two actuators are arranged horizontally. Output ends of the vertically arranged actuators are located at left and right ends of the loading bearings, and connected thereto through spherical hinges, the spherical hinges are flush with horizontal center lines of the loading bearings. Fixed ends of the vertically arranged actuators are fixed on the ground through spherical hinges. Output ends of the horizontally arranged actuators are connected to the first loading bearing 7031, and cylinder ends of the horizontally arranged actuators are fixed relatively to the ground. Both ends of all actuators are connected through hinges. The six actuators are denoted as $l_1$, $r_1$, $l_2$, $r_2$, $h_1$ and $h_2$, as shown in FIG. 4. A length of a force arm between two loading bearings of the loading apparatus 703 is represented by L, and a length of a force arm between the second loading bearing 7033 and an end of the main shaft of the test prototype is represented by $l$. The loading point is located at the origin of the coordinate system XYZ, and horizontal connection rods are mounted below the two loading bearings.

According to the embodiments of the application, loading of $F_X$, $F_Y$, $F_Z$, $M_Y$ and $M_Z$ are achieved by controlling the actuators of the loading apparatus in the loading system and the motor in the loading system, furthermore, synchronous loading of $M_X$ based on loading of the five DOF loads is satisfied, which greatly improves accuracy of load decoupling and loading and improves test accuracy.

Third embodiment

An embodiment of the application further provides a load decoupling and loading method for a wind turbine, as shown in FIG. 8, the load decoupling and loading method for the wind turbine is implemented through operations 1 to 4.

In operation 1, a wind turbine simulation device of a load decoupling and loading system for the wind turbine calculates a torque load and five DOF loads.

In operation 2, a controller group of the load decoupling and loading system for the wind turbine controls a motor to provide the torque load for a test prototype.

In operation 3, a target loading value of each actuator of a load decoupling and loading apparatus for the wind turbine is obtained according to the five DOF loads and a calculation formula of an actuator loading value matrix.

In operation 4, the controller group of the load decoupling and loading system for the wind turbine loads the target loading value and the torque load synchronously on a main shaft of the test prototype.

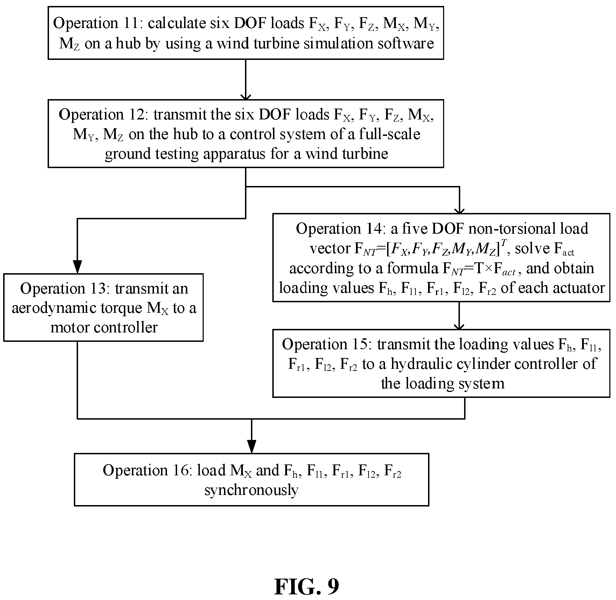

In some embodiments, the purpose of a full-scale ground test of the wind turbine is to verify consistency between a prototype and the design. Loading operations are shown in FIG. 9. A loading method of six DOF loads for testing the wind turbine includes operations 11 to 16.

In operation 11, during design of the wind turbine, six DOF components of a transmission chain load in each designed operating condition, that is, six DOF loads $F_X$, $F_Y$, $F_Z$, $M_X$, $M_Y$, $M_Z$ on a hub, are calculated by using a wind turbine simulation software.

In operation 12, the six DOF loads $F_X$, $F_Y$, $F_Z$, $M_X$, $M_Y$, $M_Z$ of each operating condition obtained during the design are transmitted to a controller of a full-scale ground loading system as loading target values.

In operation 13, the torque $M_X$ in X direction is transmitted to a motor controller as a control target value, which is loaded by the motor.

In operation 14, a five DOF non-torsional load vector $\mathbf{F}_{NT} = [F_X, F_Y, F_Z, M_Y, M_Z]^T$ is brought into a loading formula of non-torsional loads $\mathbf{F}_{NT} = \mathbf{T} \times \mathbf{F}_{act}$, to be solved to obtain $F_{act}$, and loading values $F_h$, $F_{l1}$, $F_{r1}$, $F_{l2}$, $F_{r2}$ which should be provided by each actuator in the loading apparatus are obtained.

In operation 15, elements in the loading values $F_h$, $F_{l1}$, $F_{r1}$, $F_{l2}$, $F_{r2}$ are transmitted to controllers corresponding to actuators.

In operation 16, a control system of a full-scale ground loading apparatus synchronously controls the motor controller and actuator controllers, and loads $M_X$ and $F_h$, $F_{l1}$, $F_{r1}$, $F_{l2}$, $F_{r2}$ synchronously. The torque $M_X$ is generated by the motor and applied to an end of the main shaft of the test prototype through a coupling, a rotation shaft of the loading apparatus and an adapter. $F_h$, $F_{l1}$, $F_{r1}$, $F_{l2}$, $F_{r2}$ are loaded by corresponding actuators respectively. Actuators $h_1$ and $h_2$ correspond to $F_h$. Loading values of actuators $l_1$, $r_1$, $l_2$, $r_2$ correspond to $F_{l1}$, $F_{r1}$, $F_{l2}$, $F_{r2}$ respectively.

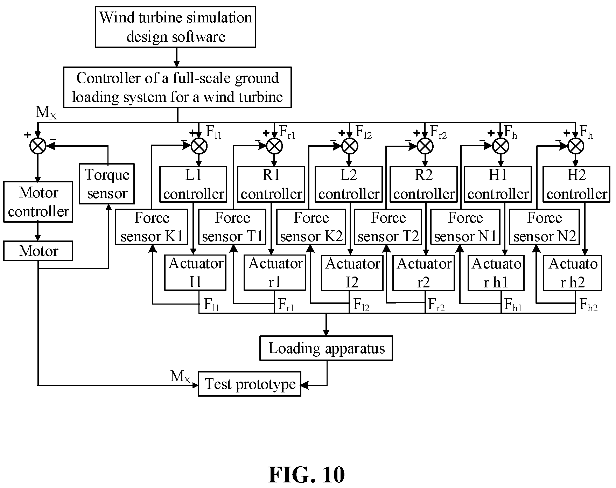

In some embodiments, as shown in FIG. 10, the operation of loading, by the controller group of the load decoupling and loading system for the wind turbine, the target loading value and the torque load synchronously on the main shaft of the test prototype includes the following operations.

Each actuator controller in the controller group controls a respective actuator to apply a loading force according to the target loading value, generate the five DOF loads, and load the five DOF loads and the torque load synchronously on the main shaft of the test prototype. Each actuator controller controls a corresponding actuator to load on a first loading bearing or a second loading bearing of the load decoupling and loading apparatus for the wind turbine according to the target loading value, an actual loading value of the corresponding actuator is fed back through a preset sensor, and the loading force applied by the actuator is adjusted when the actual loading value is not equal to the target loading value, until the actual loading value of the actuator is equal to the target loading value.

In some embodiments, operation 1 includes the following operations. Each actuator controller controls a connected actuator to generate the loading force according to the target loading value, and generate the five DOF loads loaded on the test prototype by applying the loading force to a corresponding first loading bearing or second loading bearing. The five DOF loads include horizontal and vertical loads, and the loading force includes at least a jacking force or a contraction force.

In some embodiments, operation 3 includes the following operations. A five DOF load vector is determined based on the five DOF loads. The five DOF load vector and an actuator load transition matrix are brought into the calculation formula of the actuator loading value matrix, to calculate the actuator loading value matrix. The actuator loading value matrix is determined by the target loading value of each actuator. The transition matrix is determined by a first force arm coefficient and a second force arm coefficient, the first force arm coefficient is a coefficient formed by a ratio between a force arm from an output end of an actuator $r_1$ to a center of a first loading bearing and a force arm from a horizontal connection rod to the center of the first loading bearing, and the second force arm coefficient is a coefficient formed by a ratio between a force arm from an output end of an actuator $r_2$ to a center of a second loading bearing and a force arm from the horizontal connection rod to the center of the second loading bearing.

In some embodiments, the transition matrix T is represented by the following formula (1):

$$T = \begin{bmatrix} 2 & 0 & 0 & 0 & 0 \\ 0 & \gamma_1 & -\gamma_1 & \gamma_2 & -\gamma_2 \\ 0 & 1 & 1 & 1 & 1 \\ 0 & L+l & L+l & l & l \\ 0 & -\gamma_1(L+l) & \gamma_1(L+l) & -\gamma_2 l & \gamma_2 l \end{bmatrix} \quad (1)$$

here $\gamma_1$ is the first force arm coefficient, $\gamma_2$ is the second force arm coefficient, L is a length of a force arm between the first loading bearing and the second loading bearing in the loading system, and $l$ is a length of a force arm between the second loading bearing and an end of the main shaft of the test prototype.

In some embodiments, the calculation formula $F_{act}$ of the actuator loading value matrix is represented by the following formula (2):

$$F_{act} = T^{-1} \cdot F_{NT} \quad (2)$$

here $F_{act}$ is the actuator loading value matrix, $T$ is the actuator load transition matrix, and $F_{NT}$ is the five DOF load vector, the five DOF load vector is composed of the five DOF loads. $F_{NT}$ is represented by the following formula (3), and $F_{act}$ is represented by the following formula (4):

$$F_{NT} = \begin{bmatrix} F_X \\ F_Y \\ F_Z \\ M_Y \\ M_Z \end{bmatrix} \quad (3)$$

$$F_{act} = \begin{bmatrix} F_h \\ F_{l1} \\ F_{r1} \\ F_{l2} \\ F_{r2} \end{bmatrix} \quad (4)$$

here $F_X$ is a force in a preset X direction, $F_Y$ is a force in a preset Y direction, $F_Z$ is a force in a preset Z direction, $M_Y$ is a torque around a preset Y axis, and $M_Z$ is a torque around a preset Z axis; $F_h$ is a target loading value of each of the actuator $h_1$ and the actuator $h_2$, $F_{l1}$ is a target loading value of the actuator $l_1$, $F_{r1}$ is a target loading value of the actuator $r_1$, $F_{l2}$ is a target loading value of the actuator $l_2$, and $F_{r2}$ is a target loading value of the actuator $r_2$.

In some embodiments, $T$ is a transition matrix from non-torsional loads to actuator loads. For example, a target value of five DOF non-torsional loads required to be loaded on the test prototype is $F_{NT}$, the loading vector $F_{act}$ of the actuator is solved according to the loading formula, and an acting force required to be provided by each actuator may be obtained. It may be achieved by controlling the acting force of each actuator, that the test prototype is loaded according to $F_{NT}$.

When a target load value is a variable $F_{NT}(t)$ changed over time, the loading vector of the actuator is also a variable $F_{act}(t)$ changed over time.

In some embodiments, the wind turbine tests a method for loading six DOF loads.

In some embodiments, six operating conditions may be selected for the wind turbine, to extract five DOF non-torsional loads on the hub, as shown in Table 1 below.

Table 1: a table of five DOF non-torsional loads on the hub extracted in operating conditions

| Load | Fx | Fy | Fz | My | Mz |
|---|---|---|---|---|---|
| Unit | kN | kN | kN | kNm | kNm |
| Operating condition 1 | 2000 | 0 | 0 | 0 | 0 |
| Operating condition 2 | 0 | -2000 | 0 | 0 | 0 |
| Operating condition 3 | 0 | 0 | -3000 | 0 | 0 |
| Operating condition 4 | 0 | 0 | 0 | 14000 | 0 |
| Operating condition 5 | 0 | 0 | 0 | 0 | -45000 |
| Operating condition 6 | 1000 | 600 | -1500 | -40000 | 25000 |

A loading value of each actuator is calculated according to extracted five DOF non-torsional loads on the hub, as shown in FIG. 10. Assuming that parameters of the loading system are $L$=6m, $l$=1m, $\gamma_1$=1, $\gamma_2$=1, the transition matrix $T$ from non-torsional loads to actuator loads may be obtained,

$$T = \begin{bmatrix} 2 & 0 & 0 & 0 & 0 \\ 0 & 1 & -1 & 1 & -1 \\ 0 & 1 & 1 & 1 & 1 \\ 0 & 7 & 7 & 1 & 1 \\ 0 & -7 & 7 & -1 & 1 \end{bmatrix}.$$

In some embodiments, in operating condition 1: a five DOF non-torsional load vector is $F_{NT}$ = [2000, 0, 0, 0, 0]$^T$, and $F_{act}$ = [1000 0 0 0 0]$^T$ is obtained by solving $F_{NT} = T \times F_{act}$. That is, each of the actuator $h_1$ and the actuator $h_2$ applies a jacking force of 1000kN, and acting forces of other actuators are 0.

In some embodiments, in operating condition 2: a five DOF non-torsional load vector is $F_{NT}$ = [0, -2000, 0, 0, 0]$^T$, and $F_{act}$ =[0, 166.67, -166.67, -1166.67, 1166.67]$^T$ is obtained by solving $F_{NT} = T \times F_{act}$. That is, acting forces of the actuator $h_1$ and the actuator $h_2$ are 0, a jacking force of the actuator $l_1$ is 166.67kN, a contraction force of the actuator $r_1$ is 166.67kN, a contraction force of the actuator $l_2$ is 1166.67kN, and a jacking force of the actuator $r_2$ is 1166.67kN.

In some embodiments, in operating condition 3: a five DOF non-torsional load vector is $F_{NT}$ = [0, 0, -3000, 0, 0]$^T$, and $F_{act}$ = [0, 250, 250, - 1750, -1750]$^T$ is obtained by solving $F_{NT} = T \times F_{act}$. That is, acting forces of the actuator $h_1$ and the actuator $h_2$ are 0, a jacking force of the actuator $l_1$ is 250kN, a jacking force of the actuator $r_1$ is 250kN, a contraction force of the actuator $l_2$ is 1750kN, and a contraction force of the actuator $r_2$ is 1750kN.

In some embodiments, in operating condition 4: a five DOF non-torsional load vector is $F_{NT}$=[0, 0, 0, 14000, 0]$^T$, and $F_{act}$=[0, 1166.67. 1166.67, -1166.67, -1166.67]$^T$ is obtained by solving $F_{NT} = T \times F_{act}$. That is, acting forces of the actuator $h_1$ and the actuator $h_2$ are 0, a jacking force of the actuator $l_1$ is 1166.67kN, a jacking force of the actuator $r_1$ is 1166.67kN, a contraction force of the actuator $l_2$ is 1166.67kN, and a contraction force of the actuator $r_2$ is 1166.67kN.

In some embodiments, in operating condition 5: a five DOF non-torsional load vector is $F_{NT}$ = [0, 0, 0, 0, - 45000]$^T$, and $F_{act}$ = [0, 3750, - 3750, 3750, - 3750]$^T$ is obtained by solving $F_{NT} = T \times F_{act}$. That is, acting forces of the actuator $h_1$ and the actuator $h_2$ are 0, a jacking force of the actuator $l_1$ is 3750kN, a contraction force of the actuator $r_1$ is 3750kN, a jacking force of the actuator $l_2$ is 3750kN, and a contraction force of the actuator $r_2$ is 3750kN.

In some embodiments, in operating condition 6: a five DOF non-torsional load vector is $F_{NT}$ = [1000, 600, - 1500, - 40000, 25000]$^T$, and $F_{act}$ = [500, -5341.67, -1075, 4891.67, 25]$^T$ is obtained by solving $F_{NT} = T \times F_{act}$. That is, a jacking force of each of the actuator $h_1$ and the actuator $h_2$ is 500, a contraction force of the actuator $l_1$ is 5341kN, a contraction force of the actuator $r_1$ is 1075kN, a jacking force of the actuator $l_2$ is 4891.67kN, and a jacking force of the actuator $r_2$ is 25kN.

According to the embodiments of the application, loading of the actuators of the loading apparatus is used, a load target value of each actuator is calculated, and load levels of the actuators are controlled, so that forces on the loading point are equivalent to the five DOF non-torsional loads of the wind wheel except the torque, thereby achieving loading of the five DOF loads and improving test accuracy and efficiency.

Fourth embodiment

An embodiment of the application further provides a simulation control system for a load decoupling and method for a wind turbine, the simulation control system is arranged in a wind turbine simulation device, and includes a wind turbine simulation module, a motor control module, a five DOF load calculation module and an actuator control module. The wind turbine simulation module is configured to calculate, by a wind turbine simulation device of a load decoupling and loading system for the wind turbine, a torque load and five DOF loads. The motor control module is configured to control, by a controller group of the load decoupling and loading system for the wind turbine, a motor to provide the torque load for a test prototype. The five DOF load calculation module is configured to obtain a target loading value of each actuator of a load decoupling and loading apparatus for the wind turbine according to the five DOF loads and a calculation formula of an actuator loading value matrix. The actuator control module is configured to load, by the controller group of the load decoupling and loading system for the wind turbine, the target loading value and the torque load synchronously on a main shaft of the test prototype.

In some embodiments, the actuator control module is specifically configured to control, by each actuator controller in the controller group, a respective actuator to apply a loading force according to the target loading value, generate the five DOF loads, and load the five DOF loads and the torque load synchronously on the main shaft of the test prototype. Each actuator controller controls a corresponding actuator to load on a first loading bearing or a second loading bearing of the load decoupling and loading apparatus for the wind turbine according to the target loading value, an actual loading value of the corresponding actuator is fed back through a preset sensor, and the loading force applied by the actuator is adjusted when the actual loading value is not equal to the target loading value, until the actual loading value of the actuator is equal to the target loading value.

In some embodiments, the actuator control module is further configured to control, by each actuator controller, a connected actuator to generate the loading force according to the target loading value, and generate the five DOF loads loaded on the test prototype by applying the loading force to a corresponding first loading bearing or second loading bearing. The five DOF loads include horizontal and vertical loads, and the loading force includes at least a jacking force or a contraction force.

In some embodiments, the five DOF load calculation module is specifically configured to: determine a five DOF load vector based on the five DOF loads; and bring the five DOF load vector and an actuator load transition matrix into the calculation formula of the actuator loading value matrix, to calculate the actuator loading value matrix. The actuator loading value matrix is determined by the target loading value of each actuator. The transition matrix is determined by a first force arm coefficient and a second force arm coefficient, the first force arm coefficient is a coefficient formed by a ratio between a force arm from an output end of an actuator $r_1$ to a center of a first loading bearing and a force arm from a horizontal connection rod to the center of the first loading bearing, and the second force arm coefficient is a coefficient formed by a ratio between a force arm from an output end of an actuator $r_2$ to a center of a second loading bearing and a force arm from the horizontal connection rod to the center of the second loading bearing.

In some embodiments, the transition matrix is represented by the following formula (5):

$$T = \begin{bmatrix} 2 & 0 & 0 & 0 & 0 \\ 0 & \gamma_1 & -\gamma_1 & \gamma_2 & -\gamma_2 \\ 0 & 1 & 1 & 1 & 1 \\ 0 & L+l & L+l & l & l \\ 0 & -\gamma_1(L+l) & \gamma_1(L+l) & -\gamma_2 l & \gamma_2 l \end{bmatrix} \quad (5)$$

here $\gamma_1$ is the first force arm coefficient, $\gamma_2$ is the second force arm coefficient, L is a length of a force arm between the first loading bearing and the second loading bearing in the loading system, and $l$ is a length of a force arm between the second loading bearing and an end of the main shaft of the test prototype.

In some embodiments, the calculation formula $F_{act}$ of the actuator loading value matrix is represented by the following formula (6):

$$F_{act} = T^{-1} \cdot F_{NT} \quad (6)$$

here $F_{act}$ is the actuator loading value matrix, $T$ is the actuator load transition matrix, and $F_{NT}$ is the five DOF load vector, the five DOF load vector is composed of the five DOF loads. $F_{NT}$ is represented by the following formula (7), and $F_{act}$ is represented by the following formula (8):

$$\mathbf{F}_{NT} = \begin{bmatrix} F_X \\ F_Y \\ F_Z \\ M_Y \\ M_Z \end{bmatrix} \qquad (7)$$

$$\mathbf{F}_{act} = \begin{bmatrix} F_h \\ F_{l1} \\ F_{r1} \\ F_{l2} \\ F_{r2} \end{bmatrix} \qquad (8)$$

here $F_X$ is a force in a preset X direction, $F_Y$ is a force in a preset Y direction, $F_Z$ is a force in a preset Z direction, $M_Y$ is a torque around a preset Y axis, and $M_Z$ is a torque around a preset Z axis; $F_h$ is a target loading value of each of the actuator $h_1$ and the actuator $h_2$, $F_{l1}$ is a target loading value of the actuator $l_1$, $F_{r1}$ is a target loading value of the actuator $r_1$, $F_{l2}$ is a target loading value of the actuator $l_2$, and $F_{r2}$ is a target loading value of the actuator $r_2$.

Fifth embodiment

Based on the same inventive concept, an embodiment of the application further provides a computer device, the computer device includes a processor and a memory configured to store a computer program, the computer program includes program instructions, and the processor is configured to execute the program instructions stored in a computer storage medium. The processor may be a Central Processing Unit (CPU), other general-purpose processors, a Digital Signal Processor (DSP), an Application Specific Integrated Circuit (ASIC), a Field-Programmable Gate Array (FPGA), or other programmable logic devices, a discrete gate or transistor logic device, a discrete hardware component, etc. The processor is a computing core and a control core of a terminal, and is suitable for implementing one or more instructions, specifically suitable for loading and executing one or more instructions in the computer storage medium, to implement corresponding method flows or corresponding functions, so as to implement operations of the load decoupling and loading method for a wind turbine in the above embodiments.

Sixth embodiment

Based on the same inventive concept, an embodiment of the application further provides a storage medium, specifically a computer-readable storage medium (memory) which is a memory device in a computer device and configured to store programs and data. It may be understood that the computer-readable storage medium here may include a built-in storage medium in the computer device, and of course, include an extended storage medium supported by the computer device. The computer-readable storage medium provides a storage space where an operating system of the terminal is stored. Furthermore, one or more instructions suitable for being loaded and executed by the processor are stored in the storage space, and these instructions may be one or more computer programs (including program codes). It should be noted that the computer-readable storage medium here may be a high-speed Random Access Memory (RAM) memory or a non-volatile memory, such as at least one disk memory. One or more instructions stored in the computer-readable storage medium may be loaded and executed by the processor to implement operations of the load decoupling and loading method for a wind turbine in the above embodiments.

It may be understood by those skilled in the art that the embodiments of the application may be provided as methods, systems or computer program products. Therefore, the application may take forms of embodiments with entire hardware, embodiments with entire software, or embodiments combining software with hardware aspects. Furthermore, the application may take a form of a computer program product implemented on one or more computer-available storage media (include, but are not limited to a disk storage, a Compact Disk Read-Only Memory (CD-ROM), an optical storage, etc.) containing computer-available program codes therein.

The application is described with reference to flowcharts and/or block diagrams of methods, devices (systems) and computer program products according to the embodiments of the application. It should be understood that computer program instructions may implement each flow and/or block in the flowcharts and/or the block diagrams, as well as combinations of flows and/or blocks in the flowcharts and/or the block diagrams. These computer program instructions may be provided to processors of a general-purpose computer, a dedicated computer, an embedded processor or other programmable data processing devices to generate a machine, such that instructions executed by the processors of the computer or other programmable data processing devices generate an apparatus configured to implement functions specified in one or more flows of the flowcharts and/or one or more blocks of the block diagrams.

These computer program instructions may also be stored in a computer-readable memory which may guide a computer or other programmable data processing devices to operate in a specific manner, such that the instructions stored in the computer-readable memory generate a manufactured product including an instruction apparatus, and the instruction apparatus implements functions specified in one or more flows of the flowcharts and/or one or more blocks of the block diagrams.

These computer program instructions may also be loaded on a computer or other programmable data processing devices, such that a series of operations are executed on the computer or other programmable devices to generate computer-implemented processing, and thus instructions executed on the computer or other programmable devices provide operations configured to implement functions specified in one or more flows of the flowcharts and/or one or more blocks of the block diagrams.

Finally, it may be noted that the above embodiments are only intended to explain the technical solutions of the application, rather than limiting the scope of protection of the application. Although the application has been described in detail with reference to the above embodiments, it should be understood by those of ordinary skill in the art that those skilled in the art may still make various variations, modifications or equivalent replacements to the specific implementations of the application after reading the application. The matter for which protection is sought is defined by the appended claims.

**Claims**

1. A load decoupling and loading apparatus for a wind turbine, comprising a plurality of actuators, a first loading bearing (201, 7031), a rotation shaft (202, 7032), a second loading bearing (203, 7033) and an external motor (701),

   the rotation shaft (202, 7032) arranged horizontally with a ground, the first loading bearing (201, 7031) and the second loading bearing (203, 7033) sleeved at both ends of the rotation shaft (202, 7032) respectively, an end of the rotation shaft (202, 7032) adjacent to the first loading bearing (201, 7031) connected to the external motor (701), and another end of the rotation shaft (202, 7032) adjacent to the second loading bearing (203, 7033) suitable to be connected to an external test prototype,
   output ends of the plurality of actuators connected in horizontal and vertical directions of the first loading bearing (201, 7031) and in a vertical direction of the second loading bearing (203, 7033) respectively, fixed ends of actuators in the horizontal direction connected to a supporting structure fixed on the ground through spherical hinges (301), and fixed ends of actuators in the vertical direction fixed on the ground through spherical hinges (301),
   the actuators providing five degree-of-freedom (DOF) loads for the test prototype through the first loading bearing (201, 7031) and the second loading bearing (203, 7033), and
   the motor providing a torque load for the test prototype through the first loading bearing (201, 7031), the rotation shaft (202, 7032) and the second loading bearing (203, 7033) sequentially.

2. The apparatus of claim 1, wherein the actuators connected in the vertical direction of the first loading bearing (201, 7031) comprise an actuator $l_1$ and an actuator $r_1$, and the actuator $l_1$ and the actuator $r_1$ are connected to both sides of the first loading bearing (201, 7031) respectively,

   wherein the actuators connected in the horizontal direction of the first loading bearing (201, 7031) comprise an actuator $h_1$ and an actuator $h_2$, and the actuator $h_1$ and the actuator $h_2$ are horizontally connected to both sides of the first loading bearing (201, 7031) adjacent to the rotation shaft (202, 7032) respectively,
   wherein the actuators connected in the vertical direction of the second loading bearing (203, 7033) comprise an actuator $l_2$ and an actuator $r_2$, and the actuator $l_2$ and the actuator $r_2$ are connected to both sides of the second loading bearing (203, 7033) respectively,

3. The apparatus of claim 2, wherein output ends of the actuator $l_1$ and the actuator $r_1$ are connected to both sides of the first loading bearing (201, 7031) through spherical hinges (301),

   output ends of the actuator $l_2$ and the actuator $r_2$ are connected to both sides of the second loading bearing (203, 7033) through spherical hinges (301),
   output ends of the actuator $h_1$ and the actuator $h_2$ are connected to the first loading bearing (201, 7031) through spherical hinges (301), and fixed ends of the actuator $h_1$ and the actuator $h_2$ are connected to the supporting structure fixed on the ground through spherical hinges (301), and

the spherical hinges (301) are flush with horizontal center lines of the first loading bearing (201, 7031) and the second loading bearing (203, 7033), and fixed ends of the actuator $l_1$, the actuator $r_1$, the actuator $l_2$ and the actuator $r_2$ are fixed on the ground through spherical hinges (301).

4. The apparatus of any one of claims 1 to 3, wherein horizontal connection rods (302) are further connected below the first loading bearing (201, 7031) and the second loading bearing (203, 7033), and the horizontal connection rods (302) apply reaction forces on the first loading bearing (201, 7031) and the second loading bearing (203, 7033) when the actuators load on the first loading bearing (201, 7031) or the second loading bearing (203, 7033).

5. A load decoupling and loading system for a wind turbine (703), comprising a wind turbine simulation device, a controller group, a test prototype (702), and the load decoupling and loading apparatus for the wind turbine (703) of any one of claims 1 to 4,

the controller group connected to the wind turbine simulation device, the motor (701) and the loading apparatus respectively, and the loading apparatus further connected to the test prototype (702),

the wind turbine simulation device configured to calculate a torque load and five degree-of-freedom (DOF) loads required to be loaded on the test prototype (702), and send the torque load and the five DOF loads to the controller group,

the motor (701) configured to determine a rotational speed and a torque based on the torque load provided by the controller group, and transmit the rotational speed and the torque to the loading apparatus, and

the loading apparatus configured to apply the rotational speed, the torque and the five DOF loads provided by the controller group to the test prototype (702) respectively.

6. The system of claim 5, wherein the motor (701) is connected to an end of the rotation shaft (202, 7032) of the loading apparatus adjacent to the first loading bearing (201, 7031), and another end of the rotation shaft (202, 7032) of the loading apparatus adjacent to the second loading bearing (203, 7033) is connected to a top center of a main shaft of the test prototype (702), and

the controller group comprises a motor controller and a plurality of actuator controllers, the motor controller is connected to the simulation device and the motor (701) respectively, the actuator controllers are connected to the simulation device, a number of the actuator controllers is consistent with a number of the actuators of the loading apparatus, and each actuator controller is further connected to a respective one of the actuators,

wherein the wind turbine simulation device is configured to calculate the torque load and the five DOF loads, and calculate a loading value for each actuator according to the five DOF loads.

7. The system of claim 6, wherein each actuator controller is configured to control a connected actuator to generate a loading force, and apply, by the actuator, the loading force to a corresponding first loading bearing (201, 7031) or second loading bearing (203, 7033) to generate the five DOF loads loaded on the test prototype (702),

the five DOF loads comprise horizontal and vertical loads, and the loading force comprises at least a jacking force or a contraction force.

8. The system of claim 7, wherein the first loading bearing (201, 7031) generates the horizontal load according to loading forces provided by actuators in the horizontal direction of the first loading bearing (201, 7031), and

the first loading bearing (201, 7031) and the second loading bearing (203, 7033) generate vertical loads according to loading forces provided by actuators in the vertical direction of the first loading bearing (201, 7031) and actuators in the vertical direction of the second loading bearing (203, 7033) respectively.

9. The system of claim 6, wherein the motor controller is configured to control the motor (701) to drive the rotation shaft (202, 7032) to rotate based on the torque load, then drive the first loading bearing (201, 7031) to operate, and then apply the torque load to the top center of the main shaft of the test prototype (702).

10. The system of claim 5, further comprising:

a coupling (704), an end of the rotation shaft (202, 7032) of the loading apparatus adjacent to the first loading bearing (201, 7031) connected to the motor (701) through the coupling (704), or

an adapter (705), another end of the rotation shaft (202, 7032) of the loading apparatus adjacent to the second loading bearing (203, 7033) fixedly connected to the test prototype (702) through the adapter (705).

**11.** A load decoupling and loading method for a wind turbine (703) using a loading decoupling and loading system for a winding turbine (703) according to any one of claims 5 to 10, comprising:

calculating (1), by a wind turbine simulation device of the load decoupling and loading system for the wind turbine, a torque load and five degree-of-freedom (DOF) loads;

controlling (2), by a controller group of the load decoupling and loading system for the wind turbine, a motor to provide the torque load for a test prototype;

obtaining (3) a target loading value of each actuator of the load decoupling and loading apparatus for a wind turbine of the load decoupling and loading system for a wind turbine according to the five DOF loads and a calculation formula of an actuator loading value matrix; and

loading (4), by the controller group of the load decoupling and loading system for the wind turbine, the target loading value and the torque load synchronously on a main shaft of the test prototype.

**12.** The method of claim 11, wherein loading (4), by the controller group of the load decoupling and loading system for the wind turbine, the target loading value and the torque load synchronously on the main shaft of the test prototype comprises:

controlling, by each actuator controller in the controller group, a respective actuator to apply a loading force according to the target loading value, generate the five DOF loads, and load the five DOF loads and the torque load synchronously on the main shaft of the test prototype,

wherein each actuator controller controls a corresponding actuator to load on a first loading bearing or a second loading bearing of the load decoupling and loading apparatus for the wind turbine according to the target loading value, an actual loading value of the corresponding actuator is fed back through a preset sensor, and the loading force applied by the actuator is adjusted when the actual loading value is not equal to the target loading value, until the actual loading value of the actuator is equal to the target loading value.

**13.** The method of claim 12, wherein controlling, by each actuator controller in the controller group, the respective actuator to apply the loading force according to the target loading value, generate the five DOF loads comprises:

controlling, by each actuator controller, a connected actuator to generate the loading force according to the target loading value, and generate the five DOF loads loaded on the test prototype by applying the loading force to a corresponding first loading bearing or second loading bearing,

wherein the five DOF loads comprise horizontal and vertical loads, and the loading force comprises at least a jacking force or a contraction force.

**14.** The method of claim 11, wherein obtaining the target loading value of each actuator of the load decoupling and loading apparatus for the wind turbine according to the five DOF loads and the calculation formula of the actuator loading value matrix comprises:

determining a five DOF load vector based on the five DOF loads; and

bringing the five DOF load vector and an actuator load transition matrix into the calculation formula of the actuator loading value matrix, to calculate the actuator loading value matrix,

wherein the actuator loading value matrix is determined by the target loading value of each actuator,

the transition matrix is determined by a first force arm coefficient and a second force arm coefficient, the first force arm coefficient is a coefficient formed by a ratio between a force arm from an output end of an actuator $r_1$ to a center of a first loading bearing and a force arm from a horizontal connection rod to the center of the first loading bearing, and the second force arm coefficient is a coefficient formed by a ratio between a force arm from an output end of an actuator $r_2$ to a center of a second loading bearing and a force arm from the horizontal connection rod to the center of the second loading bearing.

**15.** The method of claim 14, wherein the transition matrix T is as follows:

$$T = \begin{bmatrix} 2 & 0 & 0 & 0 & 0 \\ 0 & \gamma_1 & -\gamma_1 & \gamma_2 & -\gamma_2 \\ 0 & 1 & 1 & 1 & 1 \\ 0 & L+l & L+l & l & l \\ 0 & -\gamma_1(L+l) & \gamma_1(L+l) & -\gamma_2 l & \gamma_2 l \end{bmatrix}$$

wherein $\gamma_1$ is the first force arm coefficient, $\gamma_2$ is the second force arm coefficient, $L$ is a length of a force arm between the first loading bearing and the second loading bearing in the loading system, and $l$ is a length of a force arm between the second loading bearing and an end of the main shaft of the test prototype,

wherein the calculation formula of the actuator loading value matrix is as follows:

$$F_{act} = T^{-1} \cdot F_{NT}$$

wherein $F_{act}$ is the actuator loading value matrix, $T$ is the actuator load transition matrix, and $F_{NT}$ is the five DOF load vector, the five DOF load vector is composed of the five DOF loads,

wherein $F_{NT}$ is as follows:

$$\mathbf{F}_{NT} = \begin{bmatrix} F_X \\ F_Y \\ F_Z \\ M_Y \\ M_Z \end{bmatrix}$$

wherein $F_X$ is a force in a preset X direction, $F_Y$ is a force in a preset Y direction, $F_Z$ is a force in a preset Z direction, $M_Y$ is a torque around a preset Y axis, and $M_Z$ is a torque around a preset Z axis.

**Patentansprüche**

1. Lastentkopplungs- und Belastungseinrichtung für eine Windturbine, umfassend eine Vielzahl von Aktuatoren, ein erstes Belastungslager (201, 7031), eine Rotationswelle (202, 7032), ein zweites Belastungslager (203, 7033) und einen externen Motor (701),

   wobei die Rotationswelle (202, 7032) horizontal zu einem Boden angeordnet ist, das erste Belastungslager (201, 7031) und das zweite Belastungslager (203, 7033) jeweils an beiden Enden der Rotationswelle (202, 7032) umhüllt sind, ein Ende der Rotationswelle (202, 7032), das an das erste Belastungslager (201, 7031) angrenzt, mit dem externen Motor (701) verbunden ist, und ein anderes Ende der Rotationswelle (202, 7032), das an das zweite Belastungslager (203, 7033) angrenzt, geeignet ist, mit einem externen Testprototyp verbunden zu werden,
   Ausgangsenden der Vielzahl von Aktuatoren in horizontalen und vertikalen Richtungen des ersten Belastungslagers (201, 7031) und in einer vertikalen Richtung des zweiten Belastungslagers (203, 7033) jeweils verbunden sind, feste Enden von Aktuatoren in der horizontalen Richtung mit einer Tragstruktur verbunden sind, die durch Kugelgelenke (301) an dem Boden befestigt sind, und feste Enden von Aktuatoren in der vertikalen Richtung durch Kugelgelenke (301) an dem Boden befestigt sind,
   die Aktuatoren fünf Freiheitsgradlasten (DOF-Lasten) für den Testprototyp durch das erste Belastungslager (201, 7031) und das zweite Belastungslager (203, 7033) bereitstellen, und
   der Motor eine Drehmomentlast für den Testprototyp durch das erste Belastungslager (201, 7031), die Rotationswelle (202, 7032) und das zweite Belastungslager (203, 7033) sequenziell bereitstellt.

2. Vorrichtung nach Anspruch 1, wobei die Aktuatoren, die in der vertikalen Richtung des ersten Belastungslagers (201, 7031) verbunden sind, einen Aktuator $l_1$ und einen Aktuator $r_1$ umfassen, und der Aktuator $l_1$ und der Aktuator $r_1$ jeweils mit beiden Seiten des ersten Belastungslagers (201, 7031) verbunden sind,

   wobei die Aktuatoren, die in der horizontalen Richtung des ersten Belastungslagers (201, 7031) verbunden sind, einen Aktuator $h_1$ und einen Aktuator $h_2$ umfassen, und der Aktuator $h_1$ und der Aktuator $h_2$ jeweils horizontal mit beiden Seiten des ersten Belastungslagers (201, 7031) angrenzend an die Rotationswelle (202, 7032) verbunden sind,
   wobei die Aktuatoren, die in der vertikalen Richtung des zweiten Belastungslagers (203, 7033) verbunden sind, einen Aktuator $l_2$ und einen Aktuator $r_2$ umfassen, und der Aktuator $l_2$ und der Aktuator $r_2$ jeweils mit beiden Seiten des zweiten Belastungslagers (203, 7033) verbunden sind,

3. Vorrichtung nach Anspruch 2, wobei Ausgangsenden des Aktuators $l_1$ und des Aktuators $r_1$ mit beiden Seiten des ersten Belastungslagers (201, 7031) durch Kugelgelenke (301) verbunden sind,

Ausgangsenden des Aktuators $l_2$ und des Aktuators $r_2$ mit beiden Seiten des zweiten Belastungslagers (203, 7033) durch Kugelgelenke (301) verbunden sind,

Ausgangsenden des Aktuators $h_1$ und des Aktuators $h_2$ mit dem ersten Belastungslager (201, 7031) durch Kugelgelenke (301) verbunden sind, und feste Enden des Aktuators $h_1$ und des Aktuators $h_2$ mit der Tragstruktur verbunden sind, die durch Kugelgelenke (301) an dem Boden befestigt ist, und

die Kugelgelenke (301) mit horizontalen Mittellinien des ersten Belastungslagers (201, 7031) und des zweiten Belastungslagers (203, 7033) bündig sind, und feste Enden des Aktuators $l_1$, des Aktuators $r_1$, des Aktuators $l_2$ und des Aktuators $r_2$ über Kugelgelenke (301) an dem Boden befestigt sind.

4. Vorrichtung nach einem der Ansprüche 1 bis 3, wobei horizontale Verbindungsstangen (302) ferner unterhalb des ersten Belastungslagers (201, 7031) und des zweiten Belastungslagers (203, 7033) verbunden sind, und die horizontalen Verbindungsstangen (302) Reaktionskräfte auf das erste Belastungslager (201, 7031) und das zweite Belastungslager (203, 7033) anwenden, wenn die Aktuatoren das erste Belastungslager (201, 7031) oder das zweite Belastungslager (203, 7033) belasten.

5. Lastentkopplungs- und Belastungssystem für eine Windturbine (703), umfassend eine Windturbinensimulationsvorrichtung, eine Steuerungsgruppe, einen Testprototyp (702) und die Lastentkopplungs- und Belastungseinrichtung für die Windturbine (703) nach einem der Ansprüche 1 bis 4,

wobei die Steuerungsgruppe mit der Windturbinensimulationsvorrichtung, dem Motor (701) beziehungsweise der Belastungseinrichtung verbunden ist, und die Belastungseinrichtung ferner mit dem Testprototyp (702) verbunden ist,

die Windturbinensimulationsvorrichtung konfiguriert ist, um eine Drehmomentlast und fünf Freiheitsgradlasten (DOF-Lasten) zu berechnen, mit denen der Testprototyp (702) belastet werden muss, und die Drehmomentlast und die fünf DOF-Lasten an die Steuerungsgruppe zu senden,

der Motor (701) konfiguriert ist, um eine Rotationsgeschwindigkeit und ein Drehmoment basierend auf der Drehmomentlast zu bestimmen, die durch die Steuerungsgruppe bereitgestellt wird, und die Rotationsgeschwindigkeit und das Drehmoment an die Belastungseinrichtung zu übertragen, und

die Belastungseinrichtung konfiguriert ist, um die Rotationsgeschwindigkeit, das Drehmoment und die fünf DOF- Lasten, die durch die Steuerungsgruppe bereitgestellt werden, jeweils auf den Testprototyp (702) anzuwenden.

6. System nach Anspruch 5, wobei der Motor (701) mit einem Ende der Rotationswelle (202, 7032) der Belastungseinrichtung verbunden ist, das an das erste Belastungslager (201, 7031) angrenzt, und ein anderes Ende der Rotationswelle (202, 7032) der Belastungseinrichtung, das an das zweite Belastungslager (203, 7033) angrenzt, mit einer oberen Mitte einer Hauptwelle des Testprototyps (702) verbunden ist, und

die Steuerungsgruppe eine Motorsteuerung und eine Vielzahl von Aktuatorsteuerungen umfasst, die Motorsteuerung mit der Simulationsvorrichtung beziehungsweise dem Motor (701) verbunden ist, die Aktuatorsteuerungen mit der Simulationsvorrichtung verbunden sind, eine Anzahl der Aktuatorsteuerungen mit einer Anzahl der Aktuatoren der Belastungseinrichtung übereinstimmt, und jede Aktuatorsteuerung ferner mit einem jeweiligen der Aktuatoren verbunden ist,

wobei die Windturbinensimulationsvorrichtung konfiguriert ist, um die Drehmomentlast und die fünf DOF-Lasten zu berechnen und einen Belastungswert für jeden Aktuator gemäß den fünf DOF-Lasten zu berechnen.

7. System nach Anspruch 6, wobei jede Aktuatorsteuerung konfiguriert ist, um einen verbundenen Aktuator zu steuern, um eine Belastungskraft zu erzeugen, und durch den Aktuator die Belastungskraft auf ein entsprechendes erstes Belastungslager (201, 7031) oder zweites Belastungslager (203, 7033) anzuwenden, um die fünf DOF-Lasten zu erzeugen, mit denen der Testprototyp (702) belastet wird,

die fünf DOF-Lasten horizontale und vertikale Lasten umfassen, und die Belastungskraft mindestens eine Presskraft oder eine Kontraktionskraft umfasst.

8. System nach Anspruch 7, wobei das erste Belastungslager (201, 7031) die horizontale Last gemäß Belastungskräften erzeugt, die durch Aktuatoren in der horizontalen Richtung des ersten Belastungslagers (201, 7031) bereitgestellt werden, und

das erste Belastungslager (201, 7031) und das zweite Belastungslager (203, 7033) vertikale Lasten gemäß Belastungskräften erzeugen, die durch Aktuatoren in der vertikalen Richtung des ersten Belastungslagers (201, 7031) beziehungsweise Aktuatoren in der vertikalen Richtung des zweiten Belastungslagers (203, 7033) bereitgestellt werden.

9. System nach Anspruch 6, wobei die Motorsteuerung konfiguriert ist, um den Motor (701) zu steuern, um die Rotationswelle (202, 7032) basierend auf der Drehmomentlast anzutreiben, um zu rotieren, dann das erste Belastungslager (201, 7031) anzutreiben, um in Betrieb zu sein, und dann die Drehmomentlast auf die obere Mitte der Hauptwelle des Testprototyps (702) anzuwenden.

10. System nach Anspruch 5, ferner umfassend:

   eine Kopplung (704), wobei ein Ende der Rotationswelle (202, 7032) der Belastungseinrichtung, das an das erste Belastungslager (201, 7031) angrenzt, über die Kopplung (704) mit dem Motor (701) verbunden ist, oder einen Adapter (705), wobei ein anderes Ende der Rotationswelle (202, 7032) der Belastungseinrichtung, das an das zweite Belastungslager (203, 7033) angrenzt, über den Adapter (705) mit dem Testprototyp (702) fest verbunden ist.

11. Lastentkopplungs- und Belastungsverfahren für eine Windturbine (703) unter Verwendung eines Lastentkopplungs- und Belastungssystems für eine Windturbine (703) nach einem der Ansprüche 5 bis 10, umfassend:

   Berechnen (1), durch eine Windturbinensimulationsvorrichtung des Lastentkopplungs- und Belastungssystems für die Windturbine, einer Drehmomentlast und von fünf Freiheitsgradlasten (DOF-Lasten);
   Steuern (2), durch eine Steuerungsgruppe des Lastentkopplungs- und Belastungssystems für die Windturbine, eines Motors, um die Drehmomentlast für einen Testprototyp bereitzustellen;
   Erhalten (3) eines Zielbelastungswerts jedes Aktuators der Lastentkopplungs- und Belastungseinrichtung für eine Windturbine des Lastentkopplungs- und Belastungssystems für eine Windturbine gemäß den fünf DOF-Lasten und einer Berechnungsformel einer Aktuatorbelastungswertmatrix; und
   synchrones Belasten (4), durch die Steuerungsgruppe des Lastentkopplungs- und Belastungssystems für die Windturbine, der Hauptwelle des Testprototyps mit dem Zielbelastungswert und der Drehmomentlast.

12. Verfahren nach Anspruch 11, wobei das synchrone Belasten (4), durch die Steuerungsgruppe des Lastentkopplungs- und Belastungssystems für die Windturbine, der Hauptwelle des Testprototyps mit dem Zielbelastungswert und der Drehmomentlast umfasst:

   Steuern, durch jede Aktuatorsteuerung in der Steuerungsgruppe, eines jeweiligen Aktuators, um eine Belastungskraft gemäß dem Zielbelastungswert anzuwenden, die fünf DOF-Lasten zu erzeugen und die Hauptwelle des Testprototyps synchron mit den fünf DOF-Lasten und der Drehmomentlast zu belasten, wobei jede Aktuatorsteuerung einen entsprechenden Aktuator steuert, um ein erstes Belastungslager oder ein zweites Belastungslager der Lastentkopplungs- und Belastungseinrichtung für die Windturbine gemäß dem Zielbelastungswert zu belasten, ein tatsächlicher Belastungswert des entsprechenden Aktuators durch einen voreingestellten Sensor rückgeführt wird, und die Belastungskraft, die durch den Aktuator angewendet wird, angepasst wird, wenn der tatsächliche Belastungswert nicht gleich dem Zielbelastungswert ist, bis der tatsächliche Belastungswert des Aktuators gleich dem Zielbelastungswert ist.

13. Verfahren nach Anspruch 12, wobei das Steuern, durch jede Aktuatorsteuerung in der Steuerungsgruppe, des jeweiligen Aktuators, um die Belastungskraft gemäß dem Zielbelastungswert anzuwenden, die fünf DOF-Lasten zu erzeugen, umfasst:

   Steuern, durch jede Aktuatorsteuerung, eines verbundenen Aktuators, um die Belastungskraft gemäß dem Zielbelastungswert zu erzeugen und die fünf DOF-Lasten, mit denen der Testprototyp belastet wird, durch Anwenden der Belastungskraft auf ein entsprechendes erstes Belastungslager oder zweites Belastungslager zu erzeugen, wobei die fünf DOF-Lasten horizontale und vertikale Lasten umfassen, und die Belastungskraft mindestens eine Presskraft oder eine Kontraktionskraft umfasst.

14. Verfahren nach Anspruch 11, wobei das Erhalten des Zielbelastungswerts jedes Aktuators der Lastentkopplungs- und Belastungseinrichtung für die Windturbine gemäß den fünf DOF-Lasten und der Berechnungsformel der Aktuatorbelastungswertmatrix umfasst:

   Bestimmen eines Vektors von fünf DOF-Lasten basierend auf den fünf DOF-Lasten; und
   Einbringen des Vektors der fünf-DOF-Lasten und einer Aktuatorlastübergangsmatrix in die Berechnungsformel der Aktuatorbelastungswertmatrix, um die Aktuatorbelastungswertmatrix zu berechnen,

wobei die Aktuatorbelastungswertmatrix durch den Zielbelastungswert jedes Aktuators bestimmt wird,
die Übergangsmatrix durch einen ersten Kraftarmkoeffizienten und einen zweiten Kraftarmkoeffizienten bestimmt wird, wobei der erste Kraftarmkoeffizient ein Koeffizient ist, der durch ein Verhältnis zwischen einem Kraftarm von einem Ausgangsende eines Aktuators $r_1$ zu einer Mitte eines ersten Belastungslagers und einem Kraftarm von einer horizontalen Verbindungsstange zu der Mitte des ersten Belastungslagers ausgebildet wird, und der zweite Kraftarmkoeffizient ein Koeffizient ist, der durch ein Verhältnis zwischen einem Kraftarm von einem Ausgangsende eines Aktuators $r_2$ zu einer Mitte eines zweiten Belastungslagers und einem Kraftarm von der horizontalen Verbindungsstange zu der Mitte des zweiten Belastungslagers ausgebildet wird.

**15.** Verfahren nach Anspruch 14, wobei die Übergangsmatrix T wie folgt ist:

$$T = \begin{bmatrix} 2 & 0 & 0 & 0 & 0 \\ 0 & \gamma_1 & -\gamma_1 & \gamma_2 & -\gamma_2 \\ 0 & 1 & 1 & 1 & 1 \\ 0 & L+l & L+l & l & l \\ 0 & -\gamma_1(L+l) & \gamma_1(L+l) & -\gamma_2 l & \gamma_2 l \end{bmatrix}$$

wobei $\gamma_1$ der erste Kraftarmkoeffizient ist, $\gamma_2$ der zweite Kraftarmkoeffizient ist, $L$ eine Länge eines Kraftarms zwischen dem ersten Belastungslager und dem zweiten Belastungslager in dem Belastungssystem ist, und $l$ eine Länge eines Kraftarms zwischen dem zweiten Belastungslager und einem Ende der Hauptwelle des Testprototyps ist,
wobei die Berechnungsformel der Aktuatorbelastungswertmatrix wie folgt lautet:

$$F_{akt} = T^{-1} \cdot F_{NT}$$

wobei $F_{akt}$ die Aktuatorbelastungswertmatrix ist, $T$ die Aktuatorbelastungsübergangsmatrix ist und $F_{NT}$ der Vektor der fünf DOF-Lasten ist, wobei der Vektor der fünf DOF-Lasten aus den fünf DOF-Lasten besteht,
wobei $F_{NT}$ wie folgt ist:

$$\mathbf{F}_{NT} = \begin{bmatrix} F_X \\ F_Y \\ F_Z \\ M_Y \\ M_Z \end{bmatrix}$$

wobei $F_X$ eine Kraft in einer voreingestellten X-Richtung ist, $F_Y$ eine Kraft in einer voreingestellten Y-Richtung ist, $F_Z$ eine Kraft in einer voreingestellten Z-Richtung ist, $M_Y$ ein Drehmoment um eine voreingestellte Y-Achse ist und $M_Z$ ein Drehmoment um eine voreingestellte Z-Achse ist.

## Revendications

**1.** Appareil de découplage de charge et de chargement pour une éolienne, comprenant une pluralité d'actionneurs, un premier palier de chargement (201, 7031), un arbre de rotation (202, 7032), un second palier de chargement (203, 7033) et un moteur externe (701),

l'arbre de rotation (202, 7032) étant disposé horizontalement par rapport au sol, le premier palier de chargement (201, 7031) et le second palier de chargement (203, 7033) étant emmanchés aux deux extrémités de l'arbre de rotation (202, 7032) respectivement, une extrémité de l'arbre de rotation (202, 7032) adjacente au premier palier de chargement (201, 7031) étant reliée au moteur externe (701), et une autre extrémité de l'arbre de rotation (202, 7032) adjacente au second palier de chargement (203, 7033) étant apte à être reliée à un prototype d'essai externe,
des extrémités de sortie de la pluralité d'actionneurs étant reliées dans les directions horizontale et verticale du premier palier de chargement (201, 7031) et dans une direction verticale du second palier de chargement (203, 7033) respectivement, des extrémités fixes d'actionneurs dans la direction horizontale étant reliées à une structure de support fixée au sol par l'intermédiaire de charnières sphériques (301), et des extrémités fixes d'actionneurs dans la direction verticale étant fixées au sol par l'intermédiaire de charnières sphériques (301), les actionneurs fournissant des charges à cinq degrés de liberté (DOF) pour le prototype d'essai par l'intermédiaire du premier palier de chargement (201, 7031) et du second palier de chargement (203, 7033), et le moteur fournissant une charge de couple pour le prototype d'essai par l'intermédiaire du premier palier de chargement (201, 7031), de l'arbre de rotation (202, 7032) et du second palier de chargement (203, 7033) séquentiellement.

2. Appareil selon la revendication 1, dans lequel les actionneurs reliés dans la direction verticale du premier palier de chargement (201, 7031) comprennent un actionneur $l_1$ et un actionneur $r_1$, et l'actionneur $l_1$ et l'actionneur $r_1$ sont reliés aux deux côtés du premier palier de chargement (201, 7031) respectivement,

dans lequel les actionneurs reliés dans la direction horizontale du premier palier de chargement (201, 7031) comprennent un actionneur $h_1$ et un actionneur $h_2$, et l'actionneur $h_1$ et l'actionneur $h_2$ sont reliés horizontalement aux deux côtés du premier palier de chargement (201, 7031) adjacents à l'arbre de rotation (202, 7032) respectivement,
dans lequel les actionneurs reliés dans la direction verticale du second palier de chargement (203, 7033) comprennent un actionneur $l_2$ et un actionneur $r_2$, et l'actionneur $l_2$ et l'actionneur $r_2$ sont reliés aux deux côtés du second palier de chargement (203, 7033) respectivement.

3. Appareil selon la revendication 2, dans lequel des extrémités de sortie de l'actionneur $l_1$ et de l'actionneur $r_1$ sont reliées aux deux côtés du premier palier de chargement (201, 7031) par l'intermédiaire de charnières sphériques (301),

des extrémités de sortie de l'actionneur $l_2$ et de l'actionneur $r_2$ sont reliées aux deux côtés du second palier de chargement (203, 7033) par l'intermédiaire de charnières sphériques (301),
des extrémités de sortie de l'actionneur $h_1$ et de l'actionneur $h_2$ sont reliées au premier palier de chargement (201, 7031) par l'intermédiaire de charnières sphériques (301), et des extrémités fixes de l'actionneur $h_1$ et de l'actionneur $h_2$ sont reliées à la structure de support fixée au sol par l'intermédiaire de charnières sphériques (301), et
les charnières sphériques (301) sont dans l'alignement de lignes centrales horizontales du premier palier de chargement (201, 7031) et du second palier de chargement (203, 7033), et des extrémités fixes de l'actionneur $l_1$, de l'actionneur $r_1$, de l'actionneur $l_2$ et de l'actionneur $r_2$ sont fixées au sol par l'intermédiaire de charnières sphériques (301).

4. Appareil selon l'une quelconque des revendications 1 à 3, dans lequel des tiges de liaison horizontales (302) sont en outre reliées sous le premier palier de chargement (201, 7031) et le second palier de chargement (203, 7033), et les tiges de liaison horizontales (302) appliquent des forces de réaction sur le premier palier de chargement (201, 7031) et le second palier de chargement (203, 7033) lorsque les actionneurs sollicitent le premier palier de chargement (201, 7031) ou le second palier de chargement (203, 7033).

5. Système de découplage de charge et de chargement pour une éolienne (703), comprenant un dispositif de simulation d'éolienne, un groupe de contrôleurs, un prototype d'essai (702), et l'appareil de découplage de charge et de chargement pour l'éolienne (703) selon l'une quelconque des revendications 1 à 4,

le groupe de contrôleurs étant relié au dispositif de simulation d'éolienne, au moteur (701) et à l'appareil de chargement respectivement, et l'appareil de chargement étant en outre relié au prototype d'essai (702),
le dispositif de simulation d'éolienne étant configuré pour calculer une charge de couple et des charges à cinq degrés de liberté (DOF) devant solliciter le prototype d'essai (702), et pour envoyer la charge de couple et les charges à cinq degrés de liberté au groupe de contrôleurs,
le moteur (701) étant configuré pour déterminer une vitesse de rotation et un couple sur la base de la charge de couple fournie par le groupe de contrôleurs, et transmettre la vitesse de rotation et le couple à l'appareil de chargement, et
l'appareil de chargement étant configuré pour appliquer la vitesse de rotation, le couple et les charges à cinq degrés de liberté fournies par le groupe de contrôleurs au prototype d'essai (702) respectivement.

6. Système selon la revendication 5, dans lequel le moteur (701) est relié à une extrémité de l'arbre de rotation (202, 7032) de l'appareil de chargement adjacente au premier palier de chargement (201, 7031), et une autre extrémité de

23

l'arbre de rotation (202, 7032) de l'appareil de chargement adjacente au second palier de chargement (203, 7033) est reliée à un centre supérieur d'un arbre principal du prototype d'essai (702), et

le groupe de contrôleurs comprend un contrôleur de moteur et une pluralité de contrôleurs d'actionneurs, le contrôleur de moteur est relié au dispositif de simulation et au moteur (701) respectivement, les contrôleurs d'actionneurs sont reliés au dispositif de simulation, un nombre de contrôleurs d'actionneurs est cohérent avec un nombre d'actionneurs de l'appareil de chargement, et chaque contrôleur d'actionneur est en outre relié à un actionneur respectif parmi les actionneurs,

dans lequel le dispositif de simulation d'éolienne est configuré pour calculer la charge de couple et les charges à cinq degrés de liberté, et pour calculer une valeur de chargement pour chaque actionneur en fonction des charges à cinq degrés de liberté.

7. Système selon la revendication 6, dans lequel chaque contrôleur d'actionneur est configuré pour contrôler un actionneur relié afin de générer une force de chargement, et appliquer, par l'actionneur, la force de chargement à un premier palier de chargement (201, 7031) ou second palier de chargement (203, 7033) correspondant afin de générer les charges à cinq degrés de liberté sollicitant le prototype d'essai (702),

les charges à cinq degrés de liberté comprennent des charges horizontales et verticales, et la force de chargement comprend au moins une force de levage ou une force de contraction.

8. Système selon la revendication 7, dans lequel le premier palier de chargement (201, 7031) génère la charge horizontale en fonction de forces de chargement fournies par des actionneurs dans la direction horizontale du premier palier de chargement (201, 7031), et

le premier palier de chargement (201, 7031) et le second palier de chargement (203, 7033) génèrent des charges verticales en fonction de forces de chargement fournies par des actionneurs dans la direction verticale du premier palier de chargement (201, 7031) et des actionneurs dans la direction verticale du second palier de chargement (203, 7033) respectivement.

9. Système selon la revendication 6, dans lequel le contrôleur de moteur est configuré pour contrôler le moteur (701) afin d'entraîner l'arbre de rotation (202, 7032) de façon à ce qu'il tourne sur la base de la charge de couple, puis d'entraîner le premier palier de chargement (201, 7031) de façon à ce qu'il fonctionne, et ensuite d'appliquer la charge de couple au centre supérieur de l'arbre principal du prototype d'essai (702).

10. Système selon la revendication 5, comprenant en outre :

un accouplement (704), une extrémité de l'arbre de rotation (202, 7032) de l'appareil de chargement adjacente au premier palier de chargement (201, 7031) étant reliée au moteur (701) par l'intermédiaire de l'accouplement (704), ou

un adaptateur (705), une autre extrémité de l'arbre de rotation (202, 7032) de l'appareil de chargement adjacente au second palier de chargement (203, 7033) étant reliée de manière fixe au prototype d'essai (702) par l'intermédiaire de l'adaptateur (705).

11. Procédé de découplage de charge et de chargement pour une éolienne (703) utilisant un système de découplage de chargement et de chargement pour une éolienne (703) selon l'une quelconque des revendications 5 à 10, comprenant :

le calcul (1), par un dispositif de simulation d'éolienne du système de découplage de charge et de chargement pour l'éolienne, d'une charge de couple et de charges à cinq degrés de liberté (DOF) ;

le contrôle (2), par un groupe de contrôleurs du système de découplage de charge et de chargement pour l'éolienne, d'un moteur pour fournir la charge de couple pour un prototype d'essai ;

l'obtention (3) d'une valeur de chargement cible pour chaque actionneur de l'appareil de découplage de charge et de chargement pour une éolienne du système de découplage de charge et de chargement pour une éolienne en fonction des charges à cinq degrés de liberté et d'une formule de calcul d'une matrice de valeurs de chargement d'actionneur ; et

le chargement (4), par le groupe de contrôleurs du système de découplage de charge et de chargement pour l'éolienne, de la valeur de chargement cible et de la charge de couple de manière synchrone sur un arbre principal du prototype d'essai.

12. Procédé selon la revendication 11, dans lequel le chargement (4), par le groupe de contrôleurs du système de découplage de charge et de chargement pour l'éolienne, de la valeur de chargement cible et de la charge de couple de manière synchrone sur l'arbre principal du prototype d'essai comprend :

le contrôle, par chaque contrôleur d'actionneur dans le groupe de contrôleurs, d'un actionneur respectif pour appliquer une force de chargement en fonction de la valeur de chargement cible, générer les charges à cinq degrés de liberté, et solliciter l'arbre principal du prototype d'essai avec les charges à cinq degrés de liberté et la charge de couple de manière synchrone,

dans lequel chaque contrôleur d'actionneur contrôle un actionneur correspondant de façon à solliciter un premier palier de chargement ou un second palier de chargement de l'appareil de découplage de charge et de chargement pour l'éolienne en fonction de la valeur de chargement cible, une valeur de chargement réelle de l'actionneur correspondant est renvoyée par l'intermédiaire d'un capteur prédéfini, et la force de chargement appliquée par l'actionneur est ajustée lorsque la valeur de chargement réelle n'est pas égale à la valeur de chargement cible, jusqu'à ce que la valeur de chargement réelle de l'actionneur soit égale à la valeur de chargement cible.

13. Procédé selon la revendication 12, dans lequel le contrôle, par chaque contrôleur d'actionneur dans le groupe de contrôleurs, de l'actionneur respectif pour appliquer la force de chargement en fonction de la valeur de chargement cible, afin de générer les charges à cinq degrés de liberté comprend :

le contrôle, par chaque contrôleur d'actionneur, d'un actionneur relié pour générer la force de chargement en fonction de la valeur de chargement cible, et générer les charges à cinq degrés de liberté sollicitant le prototype d'essai en appliquant la force de chargement à un premier palier de chargement ou second palier de chargement correspondant,

dans lequel les charges à cinq degrés de liberté comprennent des charges horizontales et verticales, et la force de chargement comprend au moins une force de levage ou une force de contraction.

14. Procédé selon la revendication 11, dans lequel l'obtention de la valeur de chargement cible de chaque actionneur de l'appareil de découplage de charge et de chargement pour l'éolienne en fonction des charges à cinq degrés de liberté et de la formule de calcul de la matrice de valeurs de chargement d'actionneur comprend :

la détermination d'un vecteur de charge à cinq degrés de liberté sur la base des charges à cinq degrés de liberté ; et

l'introduction du vecteur de charge à cinq degrés de liberté et d'une matrice de transition de charge d'actionneur dans la formule de calcul de la matrice de valeurs de chargement d'actionneur, afin de calculer la matrice de valeurs de chargement d'actionneur,

dans lequel la matrice de valeurs de chargement d'actionneur est déterminée par la valeur de chargement cible de chaque actionneur,

la matrice de transition est déterminée par un premier coefficient de bras de force et un second coefficient de bras de force, le premier coefficient de bras de force est un coefficient formé par un rapport entre un bras de force allant d'une extrémité de sortie d'un actionneur $r_1$ à un centre d'un premier palier de chargement et un bras de force allant d'une tige de liaison horizontale au centre du premier palier de chargement, et le second coefficient de bras de force est un coefficient formé par un rapport entre un bras de force allant d'une extrémité de sortie d'un actionneur $r_2$ à un centre d'un second palier de chargement et un bras de force allant de la tige de liaison horizontale au centre du second palier de chargement.

15. Procédé selon la revendication 14, dans lequel la matrice de transition T est la suivante :

$$T = \begin{bmatrix} 2 & 0 & 0 & 0 & 0 \\ 0 & \gamma_1 & -\gamma_1 & \gamma_2 & -\gamma_2 \\ 0 & 1 & 1 & 1 & 1 \\ 0 & L+l & L+l & l & l \\ 0 & -\gamma_1(L+l) & \gamma_1(L+l) & -\gamma_2 l & \gamma_2 l \end{bmatrix}$$

où $\gamma_1$ est le premier coefficient de bras de force, $\gamma_2$ est le second coefficient de bras de force, L est une longueur d'un bras de force entre le premier palier de chargement et le second palier de chargement dans le système de chargement, et $l$ est une longueur d'un bras de force entre le second palier de chargement et une extrémité de l'arbre principal du prototype d'essai,

où la formule de calcul de la matrice de valeurs de chargement d'actionneur est la suivante :

$$F_{act} = T^{-1} \cdot F_{NT}$$

où $F_{act}$ est la matrice de valeurs de chargement d'actionneur, $T$ est la matrice de transition de charge d'actionneur, et $F_{NT}$ est le vecteur de charge à cinq degrés de liberté, le vecteur de charge à cinq degrés de liberté est composé des charges à cinq degrés de liberté,
où $F_{NT}$ est comme suit :

$$\mathbf{F}_{NT} = \begin{bmatrix} F_X \\ F_Y \\ F_Z \\ M_Y \\ M_Z \end{bmatrix}$$

où $F_X$ est une force dans une direction X prédéfinie, $F_Y$ est une force dans une direction Y prédéfinie, $F_Z$ est une force dans une direction Z prédéfinie, $M_Y$ est un couple autour d'un axe Y prédéfini, et $M_Z$ est un couple autour d'un axe Z prédéfini.

Plane A

**FIG. 1**

First loading
bearing 201

Rotation
shaft 202

B

Second loading
bearing 203

Z

Actuator h1

C

X

A

Spherical hinge 204

Adapter

L

l

**FIG. 2**

**FIG. 3**

**FIG. 4**

**FIG. 5**

**FIG. 6**

Motor
701

Coupling
704

Load decoupling
and loading
apparatus for a
wind turbine 703

Adapter
705

Test prototype
702

First loading bearing
7031

Rotation shaft
7032

Second loading bearing
7033

**FIG. 7**

| | Operation 1 |
|---|---|
| A wind turbine simulation device of a load decoupling and loading system for the wind turbine calculate a torque load and five DOF loads | |

| | Operation 2 |
|---|---|
| A controller group of the load decoupling and loading system for the wind turbine control a motor to provide the torque load for a test prototype | |

| | Operation 3 |
|---|---|
| Obtain a target loading value of each actuator of a load decoupling and loading apparatus for the wind turbine according to the five DOF loads and a calculation formula of an actuator loading value matrix | |

| | Operation 4 |
|---|---|
| The controller group of the load decoupling and loading system for the wind turbine load the target loading value and the torque load synchronously on a main shaft of the test prototype | |

**FIG. 8**

Operation 11: calculate six DOF loads $F_X$, $F_Y$, $F_Z$, $M_X$, $M_Y$, $M_Z$ on a hub by using a wind turbine simulation software

Operation 12: transmit the six DOF loads $F_X$, $F_Y$, $F_Z$, $M_X$, $M_Y$, $M_Z$ on the hub to a control system of a full-scale ground testing apparatus for a wind turbine

Operation 14: a five DOF non-torsional load vector $F_{NT}=[F_X,F_Y,F_Z,M_Y,M_Z]^T$, solve $F_{act}$ according to a formula $F_{NT}=T{\times}F_{act}$, and obtain loading values $F_h$, $F_{l1}$, $F_{r1}$, $F_{l2}$, $F_{r2}$ of each actuator

Operation 13: transmit an aerodynamic torque $M_X$ to a motor controller

Operation 15: transmit the loading values $F_h$, $F_{l1}$, $F_{r1}$, $F_{l2}$, $F_{r2}$ to a hydraulic cylinder controller of the loading system

Operation 16: load $M_X$ and $F_h$, $F_{l1}$, $F_{r1}$, $F_{l2}$, $F_{r2}$ synchronously

**FIG. 9**

FIG. 10

**EP 4 368 960 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211125308X

- WO 2019219160 A1

**Non-patent literature cited in the description**

- **YAN et al.** Research on Non-Torque Load Technology of Wind Power Transmission Chain. MASTER's THESIS ZHEJIANG UNIVERSITY, 01 January 2012, 1-87